# EUROPEAN PATENT SPECIFICATION

(11) **EP 4 478 437 B1**
(45) Date of publication and mention of the grant of the patent: **29.04.2026**
(21) Application number: 24179150.8
(22) Date of filing: 30.05.2024
(51) Int. Cl.: H01M 4/04, H01M 4/136, H01M 4/1397, H01M 4/58, H01M 4/62, H01M 4/66, H01M 4/02, H01M 10/0525

(54) **MULTILAYER COMPOSITE ELECTRODE SHEET, ENERGY STORAGE APPARATUS AND PREPARATION METHOD**
MEHRSCHICHTIGE VERBUNDELEKTRODENFOLIE, ENERGIESPEICHERVORRICHTUNG UND HERSTELLUNGSVERFAHREN
FEUILLE D'ÉLECTRODE COMPOSITE MULTICOUCHE, APPAREIL DE STOCKAGE D'ÉNERGIE ET PROCÉDÉ DE PRÉPARATION

(30) Priority: 09.06.2023 CN 202310681246
(43) Date of publication of application: 18.12.2024
(73) Proprietor: Hithium Tech HK Limited, Hong Kong (HK)
(72) Inventor: XIE, Yanchong, Xiamen, 361100 (CN)
(74) Representative: RGTH

(56) References cited:
- CN-A- 113 948 673
- CN-A- 116 417 567
- US-A1- 2017 256 788
- US-A1- 2022 416 251

## Description

### TECHNICAL FIELD

The present application relates to the technical field of battery preparation, and in particular, to a multilayer composite electrode sheet, an energy storage apparatus and a preparation method.

### BACKGROUND

With the development of energy storage apparatuses, the requirement for the energy density of the energy storage apparatus is getting higher and higher. Lithium manganese iron phosphate has the same material safety property as lithium iron phosphate, and the capacity per gram of lithium manganese iron phosphate and that of lithium iron phosphate are equal, both are 170mAh/g. However, compared with lithium iron phosphate, lithium manganese iron phosphate has a higher voltage platform. Therefore, the energy density of lithium manganese iron phosphate is higher than that of lithium iron phosphate.

Document US 2022/416251 A1 discloses an electrode sheet comprising an electrode current collector, an electrode junction layer, and one electrode material mixture layer disposed on the electrode junction layer and including at least an electrode active material comprising a plurality of particles, a binder, a solid electrolyte, and a plurality of conductive fibers, wherein the plurality of conductive fibers include a second conductive fiber located at an interface between the electrode junction layer and the electrode material mixture layer and connecting the electrode junction layer and the electrode active material, not obliquely inserted, and a third conductive fiber located at the interface between the electrode junction layer and the electrode material mixture layer and connecting the electrode junction layer and the solid electrolyte, the plurality of conductive fibers include a first conductive fiber that connects adjacent particles of the electrode active material.

Document US 2017/256788 A1 discloses a multilayer positive electrode sheet comprising a current collector, a first positive electrode mixture layer LiFePO4, without manganese, that provided on the positive electrode current collector, and a second positive electrode mixture layer LiFePO4, without manganese, provided on the first positive electrode mixture layer to face the separator, the first positive electrode mixture layer includes a first positive electrode active material and a first conductive material inside the first mixture layer, the second positive electrode mixture layer includes a second positive electrode active material and a second conductive material inside the second mixture layer, wherein the second positive electrode mixture layer includes 3 mass % to 5 mass % of the conductive material, preferably soft carbon, having a higher crushing strength than the lithium composite oxide having the olivine-type crystal structure, wherein the conductive material comprises vapour-grown carbon fibers or carbon nanotubes.

Document CN 113948673 A discloses a positive electrode sheet for a lithium ion battery, the positive electrode sheet for a lithium ion battery includes at least three electrode layers arranged in layers; the positive active material in the electrode layer includes at least two of lithium iron manganese phosphate, inside which a conductive agent is arranged, not between the layers, wherein the conductive agent includes at least two of carbon nanotubes, conductive carbon black, carbon fiber or graphene.

### SUMMARY

In a first aspect, the present disclosure provides a multilayer composite electrode sheet. The multilayer composite electrode sheet comprises: a positive current collector, a first lithium manganese iron phosphate layer, a second lithium manganese iron phosphate layer, a third lithium manganese iron phosphate layer, first conductive fibers, and second conductive fibers. The first lithium manganese iron phosphate layer is disposed on the positive current collector. The second lithium manganese iron phosphate layer is disposed on a surface of the first lithium manganese iron phosphate layer facing away from the positive current collector. The third lithium manganese iron phosphate layer is disposed on a surface of the second lithium manganese iron phosphate layer facing away from the first lithium manganese iron phosphate layer. One end of the first conductive fiber is inserted obliquely into the surface of the first lithium manganese iron phosphate layer facing away from the positive current collector, and the other end of the first conductive fiber is inserted obliquely into a surface of the second lithium manganese iron phosphate layer facing toward the positive current collector. One end of the second conductive fiber is inserted obliquely into the surface of the second lithium manganese iron phosphate layer facing away from the positive current collector, and the other end of the second conductive fiber is inserted obliquely into a surface of the third lithium manganese iron phosphate layer facing toward the positive current collector. The first conductive fibers extend along a direction that forms a first acute angle R1 with a first direction, the second conductive fibers extend along a direction that forms a second acute angle R2 with the first direction, and the first direction is a direction in which the positive current collector points to the first lithium manganese iron phosphate layer.

In a second aspect, the present disclosure further provides an energy storage apparatus. The energy storage apparatus comprises the multilayer composite electrode sheet of the first aspect.

In a third aspect, the present disclosure further provides a preparation method of a multilayer composite electrode sheet. The preparation method is used to prepare the multilayer composite electrode sheet described in the first aspect. The preparation method comprises:
step 1, coating a positive electrode slurry on the positive current collector to form the first lithium manganese iron phosphate layer;
step 2, inserting the first conductive fibers into the surface of the first lithium manganese iron phosphate layer facing away from the positive current collector in the direction that forms the first acute angle R1 with the first direction, and making a portion of the first conductive fiber protrude from the surface of the first lithium manganese iron phosphate layer facing away from the positive current collector;
step 3, coating a positive electrode slurry on a side of the first lithium manganese iron phosphate layer into which the first conductive fibers are inserted, to form the second lithium manganese iron phosphate layer, so that the first conductive fibers protruding from the first lithium manganese iron phosphate layer are inserted into the second lithium manganese iron phosphate layer in the direction that forms the first acute angle R1 with the first direction;
step 4, inserting the second conductive fibers into the surface of the second lithium manganese iron phosphate layer facing away from the positive current collector in the direction that forms the second acute angle R2 with the first direction, and making a portion of the second conductive fiber protrude from the surface of the second lithium manganese iron phosphate layer facing away from the positive current collector; and
step 5, coating a positive electrode slurry on a side of the second lithium manganese iron phosphate layer into which the second conductive fibers are inserted, to form the third lithium manganese iron phosphate layer, so that the second conductive fibers protruding from the second lithium manganese iron phosphate layer are inserted into the third lithium manganese iron phosphate layer in the direction that forms the second acute angle R2 with the first direction.

### BRIEF DESCRIPTION OF THE DRAWINGS

In order to more clearly illustrate the technical solutions in the embodiments of the present disclosure, the accompanying drawings to be used in the embodiments of the present disclosure will be briefly introduced below. Obviously, the drawings in the following description are only some embodiments of the present disclosure. For those of ordinary skill in the art, other drawings can be obtained based on these drawings without paying creative efforts.
FIG. 1 is a schematic structural diagram of a multilayer composite electrode sheet provided by an embodiment of the present disclosure.
FIG. 2 is a partially enlarged schematic diagram of a part A in FIG. 1;
FIG. 3 is a partially enlarged schematic diagram of a part B in FIG. 1;
FIG. 4 is a data diagram illustrating changes in the electrochemical performance of an energy storage apparatus provided by an embodiment of the present disclosure as a function of the insertion depth of first conductive fibers and second conductive fibers;
FIG. 5 is a data diagram illustrating changes in the electrochemical performance of the energy storage apparatus provided by an embodiment of the present disclosure as a function of the thickness of a third lithium manganese iron phosphate layer;
FIG. 6 is a flow chart of preparing the multilayer composite electrode sheet provided by an embodiment of the present disclosure;
FIG. 7 is a schematic structural diagram when a first lithium manganese iron phosphate layer is formed provided by an embodiment of the present disclosure;
FIG. 8 is a schematic structural diagram when the first conductive fibers are formed provided by an embodiment of the present disclosure;
FIG. 9 is a schematic structural diagram when a second lithium manganese iron phosphate layer is formed provided by an embodiment of the present disclosure;
FIG. 10 is a schematic structural diagram when the second conductive fibers are formed provided by an embodiment of the present disclosure;
FIG. 11 is a schematic structural diagram showing a formation process of the multilayer composite electrode sheet provided by an embodiment of the present disclosure;
FIG. 12 is a schematic structural diagram of providing the first conductive fibers by using a needle injection apparatus provided by an embodiment of the present disclosure;
FIG. 13 is a flow chart of providing the first conductive fibers provided by an embodiment of the present disclosure;
FIG. 14 is a flow chart of preparing the energy storage apparatus provided by an embodiment of the present disclosure.

Description of reference signs:
100-Multilayer composite electrode sheet; 110-Positive current collector; 120-First lithium manganese iron phosphate layer; 130-Second lithium manganese iron phosphate layer; 140-Third lithium manganese iron phosphate layer; 150-First conductive fiber; 160-Second conductive fiber; 170-Needle injection apparatus.

### DETAILED DESCRIPTION

The technical solutions in the embodiments of the present disclosure will be clearly and thoroughly described below with reference to the accompanying drawings in the embodiments of the present disclosure. Obviously, the described embodiments are only a part of the embodiments of the present disclosure, instead of all the embodiments. All other embodiments obtained based on the embodiments of the present disclosure by those of ordinary skill in the art without creative efforts fall within the scope of protection of the present disclosure.

In the present disclosure, the orientations or positional relationships indicated by the terms "on", "below", "left", "right", "front", "back", "top", "bottom", "inside", "outside", "vertical", "horizontal", "lateral", "longitudinal", etc., are orientations or positional relationships shown based on the accompanying drawings. These terms are used primarily to better describe the present disclosure and the embodiments thereof and are not intended to limit that the indicated apparatuses, elements or components have to be located at specific orientations, or to be constructed and operated in the specific orientations.

Moreover, some of the above terms may be used to express other meanings in addition to indicating orientations or positional relationships. For example, the term "on" may also be used to express a certain dependence relationship or connection relationship in some cases. For those of ordinary skill in the art, the specific meanings of these terms in the present disclosure may be understood according to specific circumstances.

In addition, the terms "installed", "set", "provided", "connected", and "linked" can be understood in a broad sense. For example, it may be a fixed connection, a detachable connection, or an integral construction; it may be a mechanical connection or an electrical connection; it may be a direct connection, or an indirect connection through an intermediate medium, or an internal communication between two apparatuses, elements or components. For those of ordinary skill in the art, the specific meanings of these terms in the present disclosure may be understood according to specific circumstances.

Furthermore, the terms "first", "second", etc. are used primarily to distinguish between different apparatuses, elements or components (specific types and structures may be the same or different) and are not intended to indicate or imply the relative importance or quantity of the indicated apparatuses, elements or components. Unless otherwise stated, "plurality" means two or more.

As described in the background of the present application, the requirement for the energy density of the energy storage apparatus is getting higher and higher with the development of energy storage apparatuses. Lithium manganese iron phosphate has the same material safety property as lithium iron phosphate, and the capacity per gram of lithium manganese iron phosphate and that of lithium iron phosphate are equal, both are 170mAh/g. However, compared with lithium iron phosphate, lithium manganese iron phosphate has a higher voltage platform. Therefore, the energy density of lithium manganese iron phosphate is higher than that of lithium iron phosphate.

In order to prepare an energy storage apparatus with a relatively high energy density, in the related art, a positive electrode sheet is prepared as a multilayer composite electrode sheet. For example, a positive electrode slurry is sequentially coated on the positive current collector to form a plurality of lithium manganese iron phosphate layers, which results in a relatively large internal resistance of the formed multilayer composite electrode sheet due to the existence of a connecting interface between every two adjacent lithium manganese iron phosphate layers.

The present disclosure provides a multilayer composite electrode sheet, an energy storage apparatus and a preparation method. By providing first conductive fibers between a first lithium manganese iron phosphate layer and a second lithium manganese iron phosphate layer and inserting the first conductive fibers into the first lithium manganese iron phosphate layer and the second lithium manganese iron phosphate layer respectively in a direction that forms a first acute angle R1 with the first direction, not only the connection stability between the first lithium manganese iron phosphate layer and the second lithium manganese iron phosphate layer can be improved due to the first acute angle R1 formed between the first conductive fiber and the first direction, but also the interface resistance between the first lithium manganese iron phosphate layer and the second lithium manganese iron phosphate layer can be reduced due to the conductive ability of the first conductive fibers. Similarly, by providing second conductive fibers between the second lithium manganese iron phosphate layer and a third lithium manganese iron phosphate layer and inserting the second conductive fibers into the second lithium manganese iron phosphate layer and the third lithium manganese iron phosphate layer respectively in a direction that forms a second acute angle R2 with the first direction, not only the connection stability between the second lithium manganese iron phosphate layer and the third lithium manganese iron phosphate layer can be improved due to the second acute angle R2 formed between the second conductive fiber and the first direction, but also the interface resistance between the second lithium manganese iron phosphate layer and the third lithium manganese iron phosphate layer can be reduced due to the conductive ability of the second conductive fibers. In this way, the structural strength of the multilayer composite electrode sheet can be improved, and the interface resistance between the plurality of lithium manganese iron phosphate layers can be reduced, thereby reducing the internal resistance of the multilayer composite electrode sheet.

The present application will be described in detail below through specific embodiments.

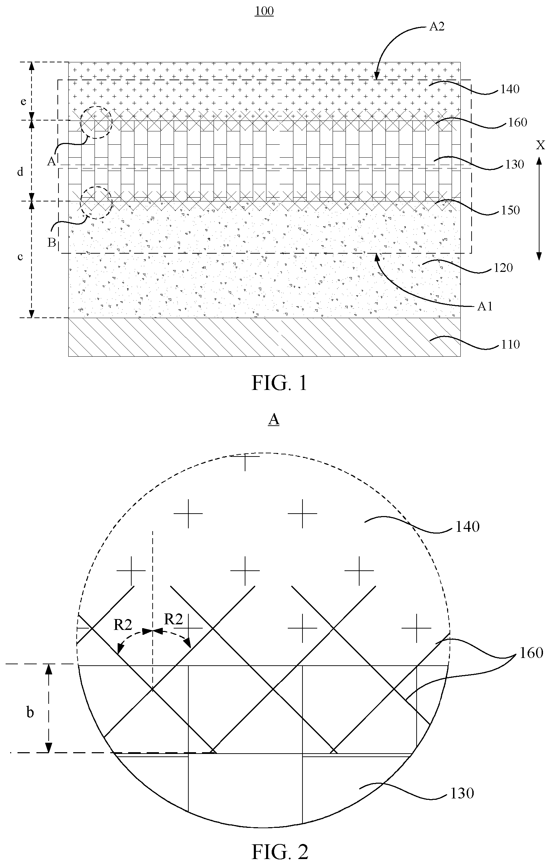

Referring to FIG. 1, FIG. 2 and FIG. 3, an embodiment of the present application provides a multilayer composite electrode sheet 100. The multilayer composite electrode sheet 100 comprises a positive current collector 110, a first lithium manganese iron phosphate layer 120, a second lithium manganese iron phosphate layer 130, a third lithium manganese iron phosphate layer 140, first conductive fibers 150 and second conductive fibers 160. The first lithium manganese iron phosphate layer 120 is disposed on the positive current collector 110. The second lithium manganese iron phosphate layer 130 is disposed on a surface of the first lithium manganese iron phosphate layer 120 facing away from the positive current collector 110. The third lithium manganese iron phosphate layer 140 is disposed on a surface of the second lithium manganese iron phosphate layer 130 facing away from the positive current collector 110. One end of the first conductive fiber 150 is inserted obliquely into the surface of the first lithium manganese iron phosphate layer 120 facing away from the positive current collector 110, and the other end of the first conductive fiber 150 is inserted obliquely into a surface of the second lithium manganese iron phosphate layer 130 facing toward the positive current collector 110. One end of the second conductive fiber 160 is inserted obliquely into the surface of the second lithium manganese iron phosphate layer 130 facing away from the positive current collector 110, and the other end of the second conductive fiber 160 is inserted obliquely into a surface of the third lithium manganese iron phosphate layer 130 facing toward the positive current collector 110. The first conductive fibers 150 extend along a direction that forms a first acute angle R1 with a first direction, the second conductive fibers 160 extend along a direction that forms a second acute angle R2 with the first direction, and the first direction is a direction in which the positive current collector 110 points to the first lithium manganese iron phosphate layer 120.

In this embodiment, the first conductive fibers 150 are provided between the first lithium manganese iron phosphate layer 120 and the second lithium manganese iron phosphate layer 130, where one end of the first conductive fiber 150 is inserted into the surface of the first lithium manganese iron phosphate layer 120 facing away from the positive current collector 110, and the other end of the first conductive fiber 150 is inserted into the surface of the second lithium manganese iron phosphate layer 130 facing toward the positive current collector 110. The second conductive fibers 160 are provided between the second lithium manganese iron phosphate layer 130 and the third lithium manganese iron phosphate layer 140, where one end of the second conductive fiber 160 is inserted into the surface of the second lithium manganese iron phosphate layer 130 facing away from the positive current collector 110, and the other end of the second conductive fiber 160 is inserted into the surface of the third lithium manganese iron phosphate layer 140 facing toward the positive current collector 110. Therefore, on the one hand, compared with the second lithium manganese iron phosphate layer 130 being directly attached to the first lithium manganese iron phosphate layer 120, it enables the first lithium manganese iron phosphate layer 120 and the second lithium manganese iron phosphate layer 130 to be connected to each other through the first conductive fibers 150, thereby improving the connection stability between the first lithium manganese iron phosphate layer 120 and the second lithium manganese iron phosphate layer 130. Similarly, it enables the second lithium manganese iron phosphate layer 130 and the third lithium manganese iron phosphate layer 140 to be connected to each other through the second conductive fibers 160, thereby improving the connection stability between the second lithium manganese iron phosphate layer 130 and the third lithium manganese iron phosphate layer 140. Therefore, the structural strength of the multilayer composite electrode sheet 100 is improved.

On another hand, conductive fibers are made of chemical fibers, metal wires or carbon fibers with conductive media, etc. Therefore, by inserting one end of the first conductive fiber 150 into the surface of the first lithium manganese iron phosphate layer 120 facing away from the positive current collector 110 and inserting the other end into the surface of the second lithium manganese iron phosphate layer 130 facing toward the positive current collector 110, and by inserting one end of the second conductive fiber 160 into the surface of the second lithium manganese iron phosphate layer 130 facing away from the positive current collector 110 and inserting the other end into the surface of the third lithium manganese iron phosphate layer 140 facing toward the positive current collector 110, the interface resistance between the first lithium manganese iron phosphate layer 120 and the second lithium manganese iron phosphate layer 130 can be reduced, and the interface resistance between the second lithium manganese iron phosphate layer 130 and the third lithium manganese iron phosphate layer 140 can also be reduced. Thus, the internal resistance of the multilayer composite electrode sheet 100 is reduced, thereby improving the electrochemical performance of the energy storage apparatus formed by the multilayer composite electrode sheet 100.

On still another hand, since the first conductive fibers 150 extend in the direction that forms the first acute angle R1 with the first direction, and the second conductive fibers 160 extend in the direction that forms the second acute angle R2 with the first direction, the pulling force exerted on the first lithium manganese iron phosphate layer 120 by the portion of the first conductive fibers 150 inserted into the first lithium manganese iron phosphate layer 120 has a component force in a direction along the layer surface of the first lithium manganese iron phosphate layer 120 and a component force in the first direction. It can be seen that the connection strength between the first conductive fibers 150 and the first lithium manganese iron phosphate layer 120 is improved, and similarly, the connection strength between the first conductive fibers 150 and the second lithium manganese iron phosphate layer 130 is improved, thereby further improving the connection stability between the first lithium manganese iron phosphate layer 120 and the second lithium manganese iron phosphate layer 130. Similarly, the strength of the connection between the second conductive fibers 160 and the second lithium manganese iron phosphate layer 130 as well as the third lithium manganese iron phosphate layer 140 are enhanced. Therefore, the structural strength of the multilayer composite electrode sheet 100 is further improved.

It can be noted that the above-mentioned multilayer composite electrode sheet 100 refers to an electrode sheet with multiple lithium manganese iron phosphate layers provided on the positive current collector 110, that is, three or more lithium manganese iron phosphate layers are formed sequentially on the positive current collector 110, and conductive fibers are provided between every two adjacent lithium manganese iron phosphate layers. In addition, the above-mentioned first lithium manganese iron phosphate layer 120, second lithium manganese iron phosphate layer 130 and third lithium manganese iron phosphate layer 140 can not be understood as a limitation on the number of lithium manganese iron phosphate layers in the multilayer composite electrode sheet 100. Similarly, the first conductive fibers 150 and the second conductive fibers 160 can not be understood as a limitation on the number of layers of conductive fibers in the multilayer composite electrode sheet 100. The number of layers of conductive fibers is related to the number of lithium manganese iron phosphate layers, i.e., the greater the number of lithium manganese iron phosphate layers, for example, a fourth lithium manganese iron phosphate layer, a fifth lithium manganese iron phosphate layer, etc., then the corresponding conductive fibers also comprise a third conductive fiber, fourth conductive fibers, etc.

In addition, the above-mentioned first direction refers to the direction perpendicular to the layer surface of the first lithium manganese iron phosphate layer 120, i.e., the direction indicated by the arrow X in FIG. 1, that is, the direction in which the positive current collector 110 points to the first lithium manganese iron phosphate layer 120, or the direction in which the first lithium manganese iron phosphate layer 120 points to the positive current collector 110, or the direction in which the first lithium manganese iron phosphate layer 120 points to the second lithium manganese iron phosphate layer 130, or the direction in which the second lithium manganese iron phosphate layer 130 points to the third lithium manganese iron phosphate layer 140, etc.

In addition, the above-mentioned first acute angle R1 and the second acute angle R2 may be equal or different, which is not limited herein.

Further, there are a plurality of first conductive fibers and a plurality of second conductive fibers. The plurality of first conductive fibers 150 are distributed at intervals on the surface of the first lithium manganese iron phosphate layer 120 facing away from the positive current collector 110. And the greater the number of the first conductive fibers 150, the smaller the spacing between every two adjacent first conductive fibers 150, and the more significant effect on improving the interface resistance between the first lithium manganese iron phosphate layer 120 and the second lithium manganese iron phosphate layer 130 by the first conductive fibers 150. Similarly, the plurality of second conductive fibers 160 are distributed at intervals on the surface of the second lithium manganese iron phosphate layer 130 facing away from the positive current collector 110. And the greater the number of the second conductive fibers 160, the more significant effect on improving the interface resistance between the second lithium manganese iron phosphate layer 130 and the third lithium manganese iron phosphate layer 140 by the second conductive fibers 160. The number of first conductive fibers 150 and the spacing between every two adjacent first conductive fibers 150 are not limited herein, and the number of second conductive fibers 160 and the spacing between every two adjacent second conductive fibers 160 are not limited herein, both of which may be designed by those skilled in the art according to the extent to which the structural strength and interface resistance of the multilayer composite electrode sheet 100 are improved by the first conductive fibers and the second conductive fibers 160, respectively.

In some possible embodiments, the first acute angle R1 and the second acute angle R2 are both in a range between 25° and 55°.

When the first acute angle R1 and the second acute angle R2 are less than 25°, the component force of the first conductive fibers 150 or the second conductive fibers 160 in the direction along the layer surface of the first lithium manganese iron phosphate layer 120 is relatively small, thereby affecting the pulling force exerted on the first lithium manganese iron phosphate layer 120 or the second lithium manganese iron phosphate layer 130 by the first conductive fibers 120 in the direction along the layer surface of the first lithium manganese iron phosphate layer 120, or, affecting the pulling force exerted on the second lithium manganese iron phosphate layer 130 or the third lithium manganese iron phosphate layer 140 by the second conductive fibers 160 in the direction along the layer surface of the first lithium manganese iron phosphate layer 120, thus the structural strength of the multilayer composite electrode sheet 100 is affected. When the first acute angle R1 and the second acute angle R2 are greater than 55°, the component force of the first conductive fibers 150 or the second conductive fibers 160 in the first direction is relatively small, thereby affecting the pulling force exerted on the first lithium manganese iron phosphate layer 120 or the second lithium manganese iron phosphate layer 130 by the first conductive fibers 150 in the first direction, or, affecting the pulling force exerted on the second lithium manganese iron phosphate layer 130 or the third lithium manganese iron phosphate layer 140 by the second conductive fibers 160 in the first direction, thus the connection stability between the plurality of lithium manganese iron phosphate layers in the multilayer composite electrode sheet 100 are affected. Based on this, the first acute angle R1 and the second acute angle R2 are set between 25° and 55°, which can not only ensure the structural strength of the multilayer composite electrode sheet 100, but also improve the connection stability between the plurality of lithium manganese iron phosphate layers.

For example, the first acute angle R1 is 25°, 28°, 30°, 35°, 38°, 40°, 45°, 48°, 50°, 55°, etc. For instance, when the first acute angle R1 and the second acute angle R2 are 45°, the component force in the first direction and the component force in the direction along the layer surface of the first lithium manganese iron phosphate layer 120 provided by the first conductive fibers 150 and the second conductive fibers 160 are the same. In this way, the first conductive fibers 150 and the second conductive fibers 160 provide a better effect on improving the structural strength of the multilayer composite electrode sheet 100 and the connection stability between the plurality of lithium manganese iron phosphate layers.

In some possible embodiments, a cross sectional plane of the stacked first lithium manganese iron phosphate layer 120 and second lithium manganese iron phosphate layer 130 in the first direction is a first section (the area shown by *A1* in FIG. 1), and projections of at least two of the first conductive fibers 150 on the first section are in a crossed state;
and a cross sectional plane of the stacked second lithium manganese iron phosphate layer 130 and third lithium manganese iron phosphate layer 140 in the first direction is a second section (the area shown by *A2* in FIG. 1), and projections of at least two of the second conductive fibers on the second section are in a crossed state.

Based on the above, the projections of at least two of the first conductive fibers 150 on the first section and the projections of at least two of the second conductive fibers 160 on the second cross section are both in the crossed state, which can improve the structural strength of the first conductive fibers 150 and the second conductive fibers 160, thereby improving the bonding strength between the first lithium manganese iron phosphate layer 120 and the second lithium manganese iron phosphate layer 130, and the bonding strength between the second lithium manganese iron phosphate layer 130 and the third lithium manganese iron phosphate layer 140.

The projections of at least two of the first conductive fibers 150 on the first section are in the crossed state. It can be understood that along the width direction of the multilayer composite electrode sheet 100, every two adjacent first conductive fibers 150 in the plurality of first conductive fibers 150 are arranged to be mirrored with the first direction as a reference line, and every two adjacent first conductive fibers 150 intersect at a position near the middle in the extending directions thereof, that is, the plurality of first conductive fibers 150 form a cross-woven conductive fiber layer in the width direction of the multilayer composite electrode sheet 100. The cross arrangement of the second conductive fibers 160 is the same as the cross arrangement of the first conductive fibers 150, and will not be repeated herein.

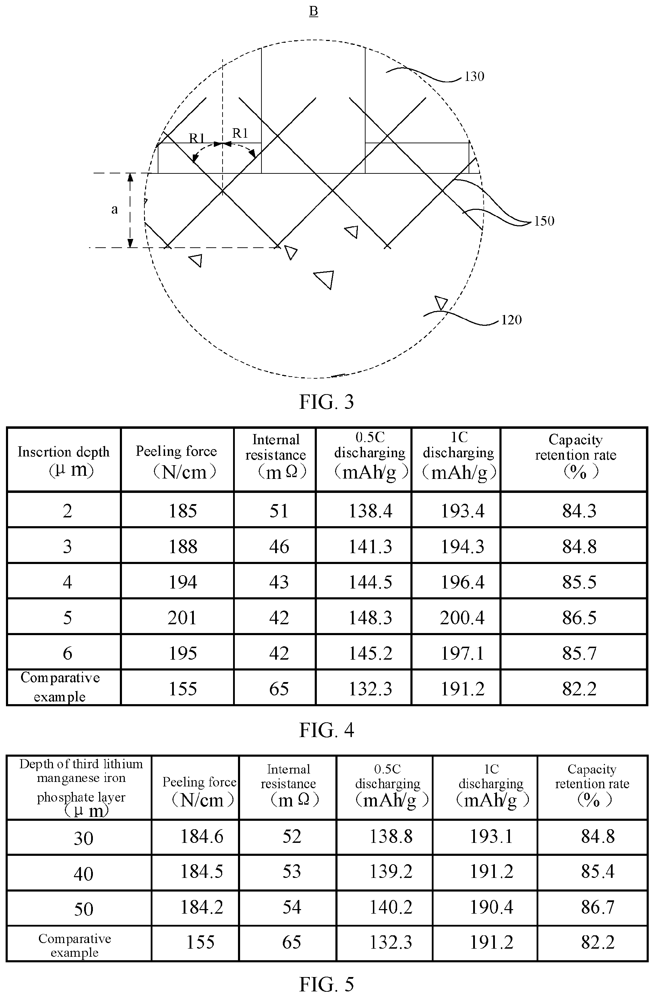

In some possible embodiments, referring to FIG. 2 and FIG. 3, an insertion depth of the first conductive fibers 150 into the first lithium manganese iron phosphate layer 120 is the same as an insertion depth of the first conductive fibers 150 into the second lithium manganese iron phosphate layer 130; and/or an insertion depth of the second conductive fibers into the second lithium manganese iron phosphate layer 130 is the same as an insertion depth of the second conductive fibers into the third lithium manganese iron phosphate layer 140 (i.e., the insertion depth of the first conductive fibers 150 into the first lithium manganese iron phosphate layer 120 is the same as the insertion depth of the first conductive fibers 150 into the second lithium manganese iron phosphate layer 130, the insertion depth of the second conductive fibers into the second lithium manganese iron phosphate layer 130 is the same as the insertion depth of the second conductive fibers into the third lithium manganese iron phosphate layer 140, or the insertion depth of the first conductive fibers 150 into the first lithium manganese iron phosphate layer 120 is the same as the insertion depth of the first conductive fibers 150 into the second lithium manganese iron phosphate layer 130 and the insertion depth of the second conductive fibers into the second lithium manganese iron phosphate layer 130 is the same as the insertion depth of the second conductive fibers into the third lithium manganese iron phosphate layer 140).

It can be noted that the above-mentioned insertion depth refers to the distance by which the first conductive fibers 150 extends into the first lithium manganese iron phosphate layer 120 and the second lithium manganese iron phosphate layer 130 in the first direction, and/or the distance by which the second conductive fibers 160 extends into the second lithium manganese iron phosphate layer 130 and the third lithium manganese iron phosphate layer 140 in the first direction (i.e., the above-mentioned insertion depth refers to the distance by which the first conductive fibers 150 extends into the first lithium manganese iron phosphate layer 120 and the second lithium manganese iron phosphate layer 130 in the first direction, the above-mentioned insertion depth refers to the distance by which the second conductive fibers 160 extends into the second lithium manganese iron phosphate layer 130 and the third lithium manganese iron phosphate layer 140 in the first direction, or the above-mentioned insertion depth refers to the distance by which the first conductive fibers 150 extends into the first lithium manganese iron phosphate layer 120 and the second lithium manganese iron phosphate layer 130 in the first direction and the distance by which the second conductive fibers 160 extends into the second lithium manganese iron phosphate layer 130 and the third lithium manganese iron phosphate layer 140 in the first direction).

When the first conductive fibers 150 are inserted into the first lithium manganese iron phosphate layer 120 at the same depth as they are inserted into the second lithium manganese iron phosphate layer 130, it can enable the pulling force exerted on the first lithium manganese iron phosphate layer 120 by the first conductive fibers 150 to be equal to the pulling force exerted on the second lithium manganese iron phosphate layer 130 by the first conductive fibers 150. Similarly, when the second conductive fibers are inserted into the second lithium manganese iron phosphate layer 130 at the same depth as they are inserted into the third lithium manganese iron phosphate layer 140, it can enable the pulling force exerted on the second lithium manganese iron phosphate layer 130 by the second conductive fibers 160 to be equal to the pulling force exerted on the third lithium manganese iron phosphate layer 140 by the second conductive fibers 160. The structural strength of the multilayer composite electrode sheet 100 is further improved, and the internal resistance of the multilayer composite electrode sheet 100 is improved.

In some possible embodiments, referring to FIG. 2 and FIG. 3, the first conductive fibers 150 are inserted into the first lithium manganese iron phosphate layer 120 to a depth of 2µm-6µm, and/or the second conductive fibers 160 are inserted into the second lithium manganese iron phosphate layer 130 to a depth of 2µm-6µm (i.e., the first conductive fibers 150 are inserted into the first lithium manganese iron phosphate layer 120 to a depth of 2µm-6µm, the second conductive fibers 160 are inserted into the second lithium manganese iron phosphate layer 130 to a depth of 2µm-6µm, or the first conductive fibers 150 are inserted into the first lithium manganese iron phosphate layer 120 to a depth of 2µm-6µm and the second conductive fibers 160 are inserted into the second lithium manganese iron phosphate layer 130 to a depth of 2µm-6µm).

The insertion depth of the first conductive fibers 150 into the first lithium manganese iron phosphate layer 120 refers to the distance shown by *a* in FIG. 3, and the insertion depth of the second conductive fibers 160 into the first lithium manganese iron phosphate layer 130 refers to the distance shown by *b* in FIG. 2.

When the insertion depth of the first conductive fibers 150 into the first lithium manganese iron phosphate layer 120 is less than 2µm, on the one hand, the effect on improving the structural strength of the multilayer composite electrode sheet 100 is weaker due to the shallower depth of the first conductive fibers 150 inserted into the first lithium manganese iron phosphate layer 120, and thus the effect on improving the interface resistance between the first lithium manganese iron phosphate layer 120 and the second lithium manganese iron phosphate layer 130 is also weaker on the other hand. When the insertion depth of the first conductive fibers 150 into the first lithium manganese iron phosphate layer 120 is greater than 6µm, although the first conductive fibers 150 are able to enhance the structural strength of the multilayer composite electrode sheet 100, the effect on improving the interface resistance between the first lithium manganese iron phosphate layer 120 and the second lithium manganese iron phosphate layer 130 is weakened and the process difficulty of setting the first conductive fibers 150 is also increased at the same time. Based on this, the first conductive fibers 150 are made to be inserted into the first lithium manganese iron phosphate layer 120 to the depth of 2µm-6µm. In this way, the structural strength of the multilayer composite electrode sheet 100 can be improved, the interface resistance can be improved, and the process difficulty of setting the first conductive fibers 150 can be simplified.

Similarly, when the second conductive fiber 160 is set to a range of 2µm-6µm, it can not only improve the structural strength of the multilayer composite electrode sheet 100, but also improve the interface resistance, and also simplify the process difficulty of setting the second conductive fibers 160.

Exemplarily, the insertion depth of the first conductive fibers 150 or the second conductive fibers 160 may be 2µm, 3µm, 4µm, 5µm, 6µm, etc.

In addition, as shown in FIG. 4, the electrochemical performance of the energy storage apparatus prepared by the multilayer composite electrode sheet 100 in the above embodiments is tested. For example, the electrochemical performance of the energy storage apparatus is tested by using a battery tester. The peeling force test in FIG. 4 refers to intercepting a 20mm*70mm multilayer composite electrode sheet 100, adhering the third lithium manganese iron phosphate layer 140 with 3M double-sided adhesive tape, and performing a 180° peeling test through a GOTECH tensile machine at a strain rate of 10mm/min, with the results based on the average of the peeling force in the length direction. The calculation manner of the capacity retention rate in FIG. 4 refers to obtaining the value of the capacity retention rate by taking the capacity of the first cycle as an initial capacity and dividing the capacity of the 150^{th} cycle by the initial capacity in an 1C charging and discharging test.

An energy storage apparatus prepared by using the multilayer composite electrode sheet 100 in the above embodiments and an energy storage apparatus prepared by using a multilayer composite electrode sheet 100 formed by simple coating (i.e., no conductive fiber is provided between every two adjacent lithium manganese iron phosphate layers of the plurality of the lithium manganese iron phosphate layers) are tested separately. For example, the tests are conducted under the condition that the insertion depths of the first conductive fibers 150 and the second conductive fibers 160 are 2µm, 3µm, 4µm, 5µm, and 6µm respectively, and the data shown in FIG. 4 is obtained.

As can be seen from FIG. 4, as the insertion depth of the first conductive fibers 150 and the second conductive fibers 160 increases, the electrochemical performance of the energy storage apparatus first increases and then decreases. For example, when the insertion depth of the first conductive fibers 150 and the second conductive fibers 160 increases from 2µm to 5µm, the electrochemical performance of the energy storage apparatus increases as the insertion depth of the first conductive fibers 150 and the second conductive fibers 160 increases. When the insertion depth of the first conductive fibers 150 and the second conductive fibers 160 increases from 5µm to 6µm, the electrochemical performance of the energy storage apparatus decreases as the insertion depth of the first conductive fibers 150 and the second conductive fibers 160 increases. Therefore, the electrochemical performance of the energy storage apparatus is good when the first conductive fibers 150 and the second conductive fibers 160 are inserted at a depth of 5µm. In addition, the peeling force also changes with the insertion depth of the first conductive fibers 150 and the second conductive fibers 160. As can be seen from FIG. 4, when the first conductive fibers 150 and the second conductive fibers 160 are inserted at a depth of 5µm, the peeling force is good, indicating that the structural strength of the multilayer composite electrode sheet 100 is good in this state. In addition, the internal resistance also changes with the insertion depth of the first conductive fibers 150 and the second conductive fibers 160. As can be seen from FIG. 4, when the insertion depth of the first conductive fibers 150 and the second conductive fibers 160 exceeds 5µm, the internal resistance of the multilayer composite electrode sheet 100 will no longer be reduced. To sum up, when the first conductive fibers 150 and the second conductive fibers 160 are inserted at a depth of 5µm, the multilayer composite electrode sheet 100 has a good structural strength, internal resistance, and electrochemical performance.

Moreover, compared with the multilayer composite electrode sheet 100 formed by simple coating in the comparative example, the multilayer composite electrode sheet 100 in the present embodiment has higher structural strength, smaller internal resistance, and better electrochemical performance.

It may be noted that the preparation method of the multilayer composite electrode sheet 100 in the comparative example comprises: preparing a first lithium manganese iron phosphate layer 120 (with the same element content of manganese metal as in the first lithium manganese iron phosphate layer 120 in the present embodiment) with a thickness of 30µm firstly, then coating a positive electrode slurry on the first lithium manganese iron phosphate layer 120 to form a second lithium manganese iron phosphate layer 130 (with the same element content of manganese metal as in the second lithium manganese iron phosphate layer 130 in the present embodiment) with a thickness of 20µm, and finally coating a positive electrode slurry on the second lithium manganese iron phosphate layer 130 to form a third lithium manganese iron phosphate layer 140 (with the same element content of manganese metal as in the third lithium manganese iron phosphate layer 140 in the present embodiment) with a thickness of 20µm.

In some possible embodiments, the element content of manganese metal in the third lithium manganese iron phosphate layer 140 is respectively less than the element content of manganese metal in the second lithium manganese iron phosphate layer 130 and the element content of manganese metal in the first lithium manganese iron phosphate layer 120.

The third lithium manganese iron phosphate layer 140 is located on the outermost side of the multilayer composite electrode sheet 100, and during the cycle of the energy storage apparatus, the third lithium manganese iron phosphate layer 140 may be in direct contact with the electrolyte. Therefore, the amount of manganese metal dissolved and precipitated during the charging and discharging cycle of the energy storage apparatus can be reduced by making the element content of manganese metal in the third lithium manganese iron phosphate layer 140 less than the element content of manganese metal in the second lithium manganese iron phosphate layer 130 and the element content of manganese metal in the first lithium manganese iron phosphate layer 120, respectively, thereby improving the cycling performance of the energy storage apparatus.

Exemplarily, the chemical formula of the lithium manganese iron phosphate is LiMnxFe1-xPO4, where the manganese metal in the third lithium manganese iron phosphate layer 140 conforms to 0.2<x<0.4, and the manganese metal in the second lithium manganese iron phosphate layer 130 and the first lithium manganese iron phosphate layer 120 conforms to x>0.4.

In some possible embodiments, the element content of manganese metal in the second lithium manganese iron phosphate layer 130 is less than the element content of manganese metal in the first lithium manganese iron phosphate layer 120.

With the increase in the number of cycles of the energy storage apparatus, the manganese metal in the second lithium manganese iron phosphate layer 130 and the first lithium manganese iron phosphate layer 120 will slowly come into contact with the electrolyte. Therefore, the dissolution and precipitation of manganese metal can be reduced on the premise of ensuring the energy density of the energy storage apparatus by making the element content of manganese metal in the second lithium manganese iron phosphate layer 130 less than the element content of manganese metal in the first lithium manganese iron phosphate layer 120, thereby further improving the cycling performance of the energy storage apparatus.

Following the above example, the manganese metal in the second lithium manganese iron phosphate layer 130 conforms to 0.4<x<0.6, and the manganese metal in the first lithium manganese iron phosphate layer 120 conforms to 0.6<x<0.8.

In some possible embodiments, a thickness of the first lithium manganese iron phosphate layer 120 is in a range of 30µm-50µm; and/or, a thickness of the second lithium manganese iron phosphate layer 130 is in a range of 20µm-30µm; and/or, a thickness of the third lithium manganese iron phosphate layer 140 is in a range of 30µm-40µm (i.e., the thickness of the first lithium manganese iron phosphate layer 120 is in a range of 30µm-50µm, the thickness of the second lithium manganese iron phosphate layer 130 is in a range of 20µm-30µm, the thickness of the third lithium manganese iron phosphate layer 140 is in a range of 30µm-40µm, the thickness of the first lithium manganese iron phosphate layer 120 is in a range of 30µm-50µm and the thickness of the second lithium manganese iron phosphate layer 130 is in a range of 20µm-30µm, the thickness of the second lithium manganese iron phosphate layer 130 is in a range of 20µm-30µm and the thickness of the third lithium manganese iron phosphate layer 140 is in a range of 30µm-40µm, the thickness of the first lithium manganese iron phosphate layer 120 is in a range of 30µm-50µm and the thickness of the third lithium manganese iron phosphate layer 140 is in a range of 30µm-40µm, or the thickness of the first lithium manganese iron phosphate layer 120 is in a range of 30µm-50µm and the thickness of the second lithium manganese iron phosphate layer 130 is in a range of 20µm-30µm and the thickness of the third lithium manganese iron phosphate layer 140 is in a range of 30µm-40µm).

The thickness of the first lithium manganese iron phosphate layer 120 refers to the distance indicated by c in FIG. 1, the thickness of the second lithium manganese iron phosphate layer 130 refers to the distance indicated by *d* in FIG. 1, and the thickness of the third lithium manganese iron phosphate layer 140 refers to the distance indicated by *e* in FIG. 1.

When the thickness of the first lithium manganese iron phosphate layer 120 is less than 30µm, the cycling performance of the energy storage apparatus is poor. When the first lithium manganese iron phosphate layer 120 is greater than 50µm, the thickness of the first lithium manganese iron phosphate layer 120 is relatively thick, which increases the process difficulty of processing the first lithium manganese iron phosphate layer 120. Based on this, the thickness of the first lithium manganese iron phosphate layer 120 is set to a range of 30µm-50µm, which can not only improve the cycling performance of the energy storage apparatus, but also simplify the processing difficulty of the first lithium manganese iron phosphate layer 120.

In addition, when the thickness of the second lithium manganese iron phosphate layer 130 is less than 20µm, it will also affect the cycling performance of the energy storage apparatus. When the thickness of the second lithium manganese iron phosphate layer 130 is greater than 30µm, it will make the overall thickness of the multilayer composite electrode sheet 100 thicker, thereby affecting the energy density of the energy storage apparatus. Based on this, the thickness of the second lithium manganese iron phosphate layer 130 is set to a range of 20µm-30µm, which can not only improve the cycling performance of the energy storage apparatus, but also improve the energy density of the energy storage apparatus.

In addition, when the thickness of the third lithium manganese iron phosphate layer 140 is less than 30µm, the electrolyte will easily pass through the third lithium manganese iron phosphate layer 140 during the cyclic charging and discharging process of the energy storage apparatus, thus increasing the dissolution and precipitation of manganese metal, which is not conducive to improving the cycling performance of the energy storage apparatus. When the thickness of the third lithium manganese iron phosphate layer 140 is greater than 40µm, the overall thickness of the multilayer composite electrode sheet will be greater, which is not conducive to improving the energy density of the energy storage apparatus. Based on this, the thickness of the third lithium manganese iron phosphate layer is set to a range of 30µm-40µm, which can not only improve the energy density of the energy storage apparatus, but also improve the cycling performance of the energy storage apparatus.

In combination with FIG. 4 and FIG. 5, when the first lithium manganese iron phosphate layer 120 has a thickness of 30µm and the second lithium manganese iron phosphate layer 130 has a thickness of about 20µm-30µm, in different states where the thickness of the third lithium manganese iron phosphate layer 140 increases from 30µm to 50µm, the electrochemical performance of the energy storage apparatus first increases and then decreases as the thickness of the third lithium manganese iron phosphate layer 140 increases. That is, as the thickness of the third lithium manganese iron phosphate layer 140 increases from 30µm to 40µm, the electrochemical performance of the energy storage apparatus increases with the increase in the thickness of the third lithium manganese iron phosphate layer 140, and when the thickness of the third lithium manganese iron phosphate layer 140 increases from 40µm to 50µm, the electrochemical performance of the energy storage apparatus decreases as the thickness of the third lithium manganese iron phosphate layer 140 increases. Therefore, the thickness of the third lithium manganese iron phosphate layer 140 can not be less than 30µm. In addition, as the thickness of the third lithium manganese iron phosphate layer 140 increases, the peeling force of the composite double layer electrode sheet gradually decreases, and the internal resistance of the multilayer composite electrode sheet 100 gradually increases.

In addition, as the thickness of the third lithium manganese iron phosphate layer 140 increases, the peeling force also changes. As can be seen in FIG. 5, the peeling force is good when the third lithium manganese iron phosphate layer 140 is 30µm, indicating that the structural strength of the multilayer composite electrode sheet 100 is better in this state. In addition, as the thickness of the third lithium manganese iron phosphate layer 140 increases, the internal resistance also changes, and as can be seen in FIG. 5, the greater the thickness of the third lithium manganese iron phosphate layer 140, the greater the internal resistance of the multilayer composite electrode sheet 100.

Moreover, compared with the multilayer composite electrode sheet 100 formed by simple coating in the comparative example, the multilayer composite electrode sheet 100 in the present embodiment has a higher structural strength, smaller internal resistance, and better electrochemical performance.

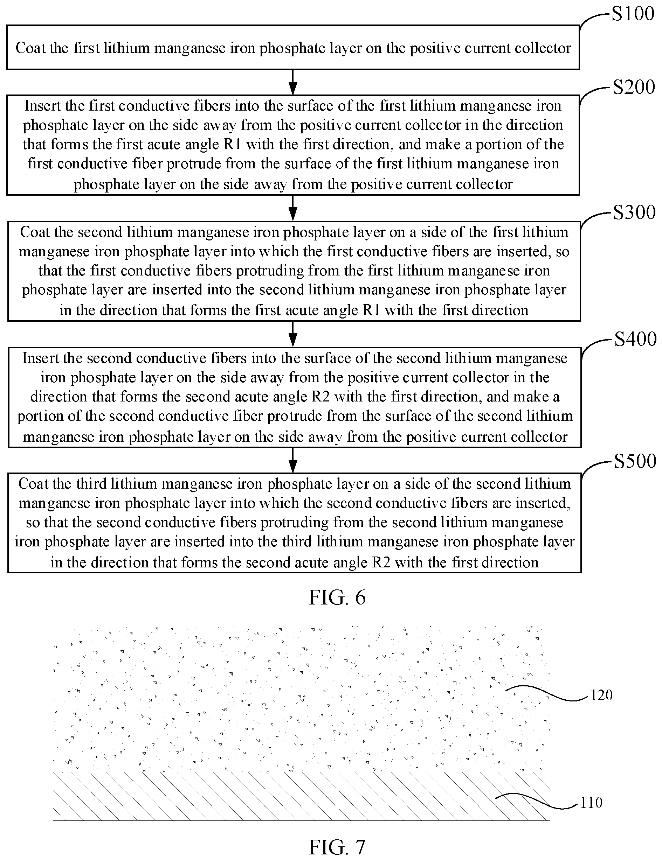

Referring to FIG. 6, an embodiment of the present application further provides a preparation method of a multilayer composite electrode sheet 100, where the preparation method is used to prepare the multilayer composite electrode sheet 100 described in the above embodiment, and the preparation method comprises the following steps.

In step S100, a positive electrode slurry is coated on a positive current collector to form a first lithium manganese iron phosphate layer.

For example, lithium manganese iron phosphate (LiMnxFe1-xPO4 and 0.6<x<0.8), conductive carbon black, and polyvinylidene fluoride are firstly weighed with a mass ratio of 95%:2%:3% and put into a stirred tank, and an appropriate amount of N-methylpyrrolidone is added to the stirred tank. The stirred tank is then started to stir for a certain period of time, for example, 6 hours to obtain a first slurry with an appropriate viscosity. Finally, the first slurry is uniformly coated on the positive current collector 110 through an extrusion manner to form the first lithium manganese iron phosphate layer 120 as shown in FIG. 7.

In step 200, first conductive fibers are inserted into a surface of the first lithium manganese iron phosphate layer facing away from the positive current collector in a direction that forms a first acute angle R1 with a first direction, and a portion of the first conductive fiber is made protrude from the surface of the first lithium manganese iron phosphate layer facing away from the positive current collector.

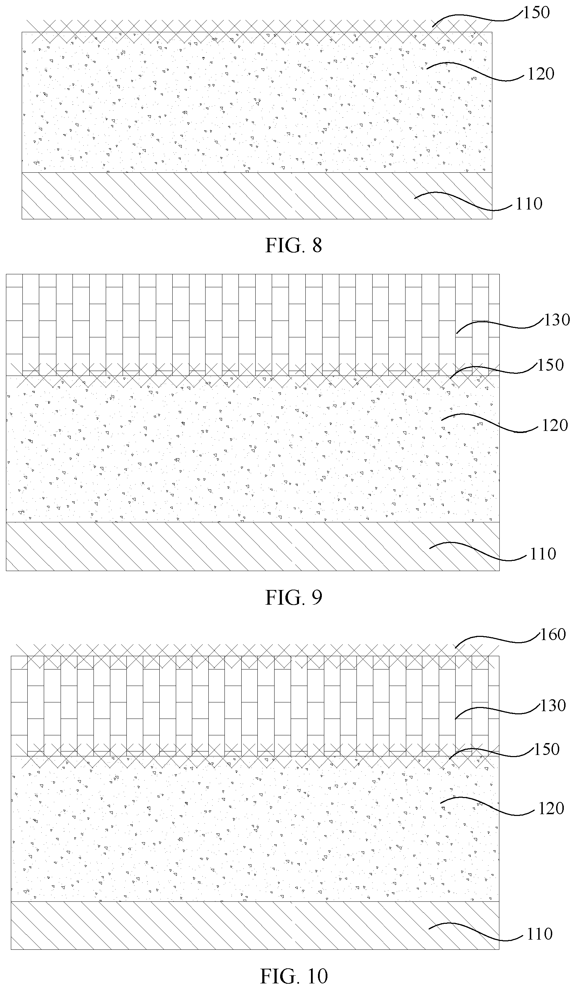

For example, the first conductive fibers 150 are first dissolved in N-methylpyrrolidone, and then a uniformly mixed slurry of the first conductive fibers 150 is obtained by stirring for a certain period of time. Then, an auxiliary apparatus is used to insert the slurry of the first conductive fibers 150 into the surface of the first lithium manganese iron phosphate layer 120 facing away from the positive current collector 110 in the direction that forms a first acute angle R1 with the first direction, and a portion of the first conductive fiber 150 is made protrude from the surface of the first lithium manganese iron phosphate layer 120 facing away from the positive current collector 110 as shown in FIG. 8.

In step S300, a positive electrode slurry is coated on a side of the first lithium manganese iron phosphate layer into which the first conductive fibers are inserted, to form a second lithium manganese iron phosphate layer, so that the first conductive fibers protruding from the first lithium manganese iron phosphate layer are inserted into the second lithium manganese iron phosphate layer in the direction that forms the first acute angle R1 with the first direction.

For example, lithium manganese iron phosphate (LiMnxFe1-xPO4 and 0.4<x<0.6), conductive carbon black, and polyvinylidene fluoride are firstly weighed with a mass ratio of 95%:2%:3% and put into a stirred tank, and an appropriate amount of N-methylpyrrolidone is added to the stirred tank. The stirred tank is then started to stir for a certain period of time, for example, 6 hours to obtain a second slurry with an appropriate viscosity. Finally, the second slurry is uniformly coated on the first lithium manganese iron phosphate layer 120 through an extrusion manner to form the second lithium manganese iron phosphate layer 130 as shown in FIG. 9.

In addition, the surface of the first lithium manganese iron phosphate layer 120 facing away from the positive current collector 110 is provided with the first conductive fiber 150 that forms the first acute angle R1 with the first direction, and a portion of the first conductive fiber 150 protrudes from the first lithium manganese iron phosphate layer 120. Therefore, the first conductive fibers 150 protruding from the first lithium manganese iron phosphate layer 120 will be inserted into the second lithium manganese iron phosphate layer 130 in the direction that forms the first acute angle R1 with the first direction.

In step S400, the second conductive fibers are inserted into the surface of the second lithium manganese iron phosphate layer facing away from the positive current collector in the direction that forms the second acute angle R2 with the first direction, and a portion of the second conductive fiber is made protrude from the surface of the second lithium manganese iron phosphate layer facing away from the positive current collector.

For example, the second conductive fibers 160 are first dissolved in N-methylpyrrolidone, and then a uniformly mixed slurry of the second conductive fibers 160 is obtained by stirring for a certain period of time. Then, an auxiliary apparatus is used to insert the slurry of the second conductive fibers 160 into the surface of the second lithium manganese iron phosphate layer 130 facing away from the positive current collector 110 in the direction that forms a second acute angle R2 with the first direction, and a portion of the second conductive fiber 160 is made protrude from the surface of the second lithium manganese iron phosphate layer 130 facing away from the positive current collector 110 as shown in FIG. 10.

In step 500, a positive electrode slurry is coated on a side of the second lithium manganese iron phosphate layer into which the second conductive fibers are inserted, to form the third lithium manganese iron phosphate layer, so that the second conductive fibers protruding from the second lithium manganese iron phosphate layer are inserted into the third lithium manganese iron phosphate layer in the direction that forms the second acute angle R2 with the first direction.

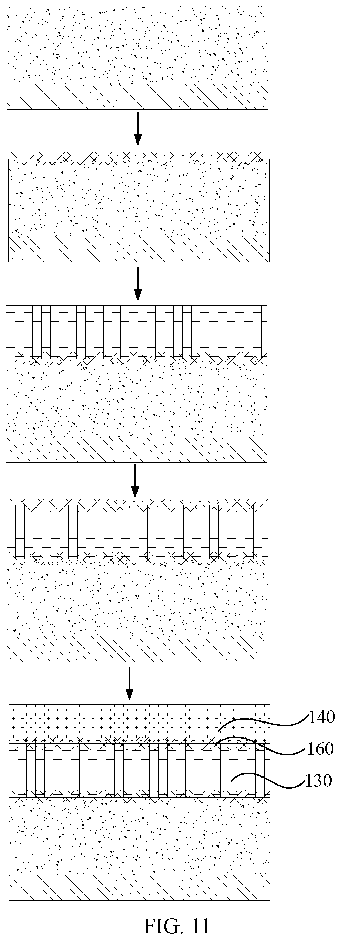

For example, lithium manganese iron phosphate (LiMnxFe1-xPO4 and 0.2<x<0.4), conductive carbon black, and polyvinylidene fluoride are firstly weighed with a mass ratio of 95%:2%:3% and put into a stirred tank, and an appropriate amount of N-methylpyrrolidone is added to the stirred tank. The stirred tank is then started to stir for a certain period of time, for example, 6 hours to obtain a third slurry with an appropriate viscosity. Finally, the third slurry is uniformly coated on the second lithium manganese iron phosphate layer 130 through an extrusion manner to form the third lithium manganese iron phosphate layer 140 as shown in FIG. 11.

In addition, the surface of the second lithium manganese iron phosphate layer 130 facing away from the positive current collector 110 is provided with the second conductive fiber 160 that forms the second acute angle R2 with the first direction, and a portion of the second conductive fiber 160 protrudes from the second lithium manganese iron phosphate layer 130. Therefore, the second conductive fibers 160 protruding from the second lithium manganese iron phosphate layer 130 will be inserted into the third lithium manganese iron phosphate layer 140 in the direction that forms the second acute angle R2 with the first direction.

In this embodiment, before forming the first lithium manganese iron phosphate layer 120 with the second lithium manganese iron phosphate layer 130, first conductive fibers 150 forming a first acute angle R1 with the first direction are disposed on the first lithium manganese iron phosphate layer 120. Before forming the second lithium manganese iron phosphate layer 130 with the third lithium manganese iron phosphate layer 140, second conductive fibers 160 forming a second acute angle R2 with the first direction are disposed on the second lithium manganese iron phosphate layer 130. Therefore, on the one hand, compared with the second lithium manganese iron phosphate layer 130 being directly attached to the first lithium manganese iron phosphate layer 120, it enables the first lithium manganese iron phosphate layer 120 and the second lithium manganese iron phosphate layer 130 to be connected to each other through the first conductive fibers 150, thereby improving the connection stability between the first lithium manganese iron phosphate layer 120 and the second lithium manganese iron phosphate layer 130. Similarly, it enables the second lithium manganese iron phosphate layer 130 and the third lithium manganese iron phosphate layer 140 to be connected to each other through the second conductive fibers 160, thereby improving the connection stability between the second lithium manganese iron phosphate layer 130 and the third lithium manganese iron phosphate layer 140. Therefore, the structural strength of the multilayer composite electrode sheet 100 is improved.

On another hand, conductive fibers are made of chemical fibers, metal wires or carbon fibers with conductive media, etc. Therefore, the interface resistance between the first lithium manganese iron phosphate layer 120 and the second lithium manganese iron phosphate layer 130 can be reduced through the first conductive fibers 150 and the interface resistance between the second lithium manganese iron phosphate layer 130 and the third lithium manganese iron phosphate layer 140 can be reduced through the second conductive fibers 160. Thus, the internal resistance of the multilayer composite electrode sheet 100 is reduced, thereby improving the electrochemical performance of the energy storage apparatus formed by the multilayer composite electrode sheet 100.

On still another hand, since the first conductive fiber 150 forms a first acute angle R1 with the first direction, and the second conductive fiber 160 forms a second acute angle R2 with the first direction, the pulling force exerted on the first lithium manganese iron phosphate layer 120 by the portion of the first conductive fibers 150 inserted into the first lithium manganese iron phosphate layer 120 has a component force in a direction along the layer surface of the first lithium manganese iron phosphate layer 120 and a component force in the first direction. It can be seen that the connection strength between the first conductive fibers 150 and the first lithium manganese iron phosphate layer 120 is improved, and similarly, the connection strength between the first conductive fibers 150 and the second lithium manganese iron phosphate layer 130 is improved, thereby improving the connection stability between the first lithium manganese iron phosphate layer 120 and the second lithium manganese iron phosphate layer 130. Similarly, the connection strength between the second conductive fibers 160 and the second lithium manganese iron phosphate layer 130 as well as the third lithium manganese iron phosphate layer 140 are enhanced. Therefore, the structural strength of the multilayer composite electrode sheet 100 is further improved.

In some possible embodiments, regarding the preparation method of inserting the first conductive fibers 150 into the surface of the first lithium manganese iron phosphate layer 120 facing away from the positive current collector 110 in the direction forming a first acute angle R1 with the first direction in the above embodiment, the preparation method comprises: injecting one end of the first conductive fiber 150 into the surface of the first lithium manganese iron phosphate layer 120 facing away from the positive current collector 110 in the direction that forms the first acute angle R1 with the first direction by using a needle injection apparatus 170.

For example, during the process of injecting the first conductive fibers 150 into the first lithium manganese iron phosphate layer 120 by using the needle injection apparatus 170, the injection volume, the movement speed, and the injection frequency of the needle injection apparatus 170 are controlled to extend the slurry of the first conductive fibers 150 into the interior of the first lithium manganese iron phosphate layer 120 so as to insert the first conductive fibers 150 into the interior of the first lithium manganese iron phosphate layer 120.

It can be seen that the operation process of injecting the first conductive fibers 150 into the first lithium manganese iron phosphate layer 120 by using the needle injection apparatus 170 is simple and the operation efficiency is high.

In some possible embodiments, the preparation method comprises: injecting, by the needle injection apparatus 170, the first conductive fibers 150 in a state where the first lithium manganese iron phosphate layer 120 is not completely dry.

As a result, the first lithium manganese iron phosphate layer 120 in an incompletely dried state is relatively soft, which enables the first conductive fibers 150 to be inserted into the first lithium manganese iron phosphate layer 120 with less resistance, thereby facilitating the formation of the first conductive fibers 150 in the crossed state.

In addition, the humidity of the first lithium manganese iron phosphate layer 120 in the incompletely dried state is around 30%, for example, the humidity of the first lithium manganese iron phosphate layer 120 in the incompletely dried state is 30%, 31%, etc.

The injection of the second conductive fibers 160 is carried out when the second lithium manganese iron phosphate layer 130 is in an incompletely dried state.

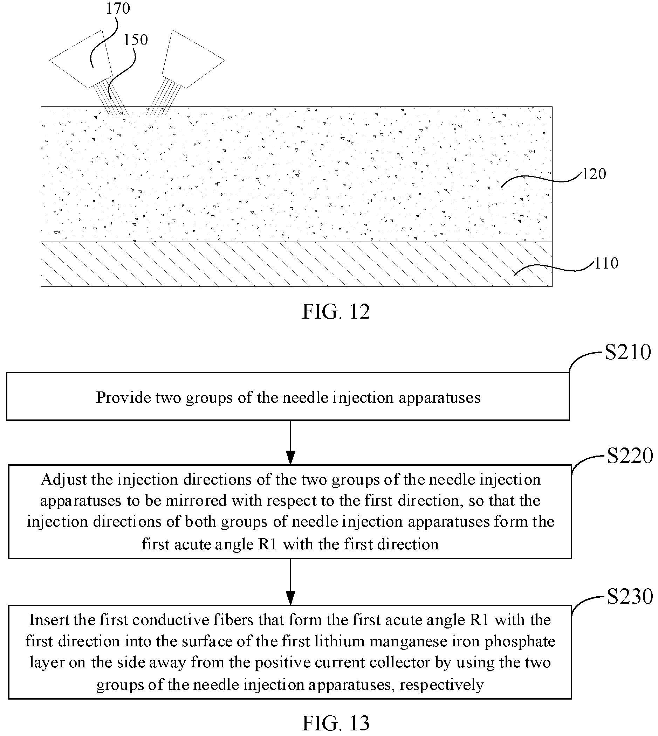

In some possible embodiments, referring to FIG. 12, the inserting the second conductive fibers 160 into the surface of the second lithium manganese iron phosphate layer 130 facing away from the positive current collector 110 in the direction that forms the second acute angle R2 with the first direction comprises:
injecting one end of the second conductive fiber 160 into the surface of the second lithium manganese iron phosphate layer 130 facing away from the positive current collector 110 in the direction that forms the second acute angle R2 with the first direction by using the needle injection apparatus 170.

For example, the principle of inserting the second conductive fibers 160 into the second lithium manganese iron phosphate layer 130 is the same as the principle of inserting the first conductive fibers 150 into the first lithium manganese iron phosphate layer 120, and details may refer to the above description, which will not be repeated herein.

In some possible embodiments, with reference to FIG. 13, the preparation method of injecting one end of the first conductive fiber 150 into the surface of the first lithium manganese iron phosphate layer 120 facing away from the positive current collector 110 in the direction that forms the first acute angle R1 with the first direction by using the needle injection apparatus 170 comprises the following steps.

In step S210, two groups of the needle injection apparatuses are provided.

For example, each group of needle injection apparatuses 170 may inject multiple first conductive fibers 150 simultaneously, which improves the efficiency of arranging the first conductive fibers 150.

In step S220, the injection directions of the two groups of the needle injection apparatuses are adjusted to be mirrored with respect to the first direction, so that the injection directions of both groups of needle injection apparatuses form the first acute angle R1 with the first direction.

For example, before starting the injection, the injection directions of the needle injection apparatuses 170 are first adjusted, either manually or automatically, until the injection directions of the needle injection apparatus 170 form a first acute angle R1 with the first direction, where the first acute angle R1 may be understood as an acute angle or an obtuse angle.

In step S230, the first conductive fibers that form the first acute angle R1 with the first direction are injected into the surface of the first lithium manganese iron phosphate layer facing away from the positive current collector by using the two groups of the needle injection apparatuses, respectively.

For example, the two groups of needle injection apparatuses 170 with the injection directions adjusted are moved to directly above the area where the first lithium manganese iron phosphate layer 120 is to be provided with the first conductive fibers 150. In addition, the needle injection apparatus 170 comprises a storage bin that is communicated with the injection head and is used to store the slurry of the first conductive fibers 150. When the needle injection apparatus 170 is pressurized and squeezed, the slurry of the first conductive fibers 150 in the storage bin will be injected into the first lithium manganese iron phosphate layer 120 through the injection head. The first lithium manganese iron phosphate layer 120 provided with the first conductive fibers 150 is then sufficiently dried by an oven (the drying temperature of the oven is about 120°C, and the drying time is about 5 hours) to form the first lithium manganese iron phosphate layer 120 with a special distribution of the first conductive fibers 150.

By providing the first conductive fibers 150 forming the acute angle R1 with the first direction, the pulling force exerted on the first lithium manganese iron phosphate layer 120 by the portion of the first conductive fibers 150 inserted into the first lithium manganese iron phosphate layer 120 has a component force in a direction along the layer surface of the first lithium manganese iron phosphate layer 120 and a component force in the first direction. It can be seen that the connection strength between the first conductive fibers 150 and the first lithium manganese iron phosphate layer 120 is improved, and similarly, the connection strength between the first conductive fibers 150 and the second lithium manganese iron phosphate layer 130 is improved, thereby improving the connection stability between the first lithium manganese iron phosphate layer 120 and the second lithium manganese iron phosphate layer 130.

In addition, the arrangement process of the second conductive fibers 160 is the same as the arrangement process of the first conductive fibers 150. The preparation process of the second conductive fibers 160 may refer to the above-mentioned preparation process of the first conductive fibers 150, and the specific preparation process of the second conductive fibers 160 will not be repeated herein.

In some possible embodiments, the adjusting the injection directions of the two groups of the needle injection apparatuses to be mirrored with respect to the first direction, so that the injection directions of both groups of needle injection apparatuses form the first acute angle R1 with the first direction comprises:
adjusting the injection directions of the two groups of the needle injection apparatuses 170 to both form an angle of 25°-55° with the first direction.

For example, the injection directions of the two groups of needle injection apparatuses 170 are adjusted respectively, so that the injection directions of the two groups of the needle injection apparatuses 170 are symmetrical with respect to the first direction, and the symmetry herein refers to approximately symmetry.

When the angles between the injection direction of both groups of needle injection apparatuses 170 and the first direction are less than 25°, the component force of the first conductive fibers 150 or the second conductive fibers 160 in the direction along the layer surface of the first lithium manganese iron phosphate layer 120 is smaller, thereby affecting the pulling force exerted on the first lithium manganese iron phosphate layer 120 or the second lithium manganese iron phosphate layer 130 by the first conductive fibers 150 in the direction along the layer surface of the first lithium manganese iron phosphate layer 120, or, affecting the pulling force exerted on the second lithium manganese iron phosphate layer 130 or the third lithium manganese iron phosphate layer 140 by the second conductive fibers 160 in the direction along the layer surface of the first lithium manganese iron phosphate layer 120, thus the structural strength of the multilayer composite electrode sheet 100 is affected. When the angles between the injection direction of both groups of needle injection apparatuses 170 and the first direction are greater than 55°, the component force of the first conductive fibers 150 or the second conductive fibers 160 in the first direction is smaller, thereby affecting the pulling force exerted on the first lithium manganese iron phosphate layer 120 or the second lithium manganese iron phosphate layer 130 by the first conductive fibers 150 in the first direction, or, affecting the pulling force exerted on the second lithium manganese iron phosphate layer 130 or the third lithium manganese iron phosphate layer 140 by the second conductive fibers 160 in the first direction, thus the connection stability between the plurality of lithium manganese iron phosphate layers in the multilayer composite electrode sheet 100 are affected. Based on this, the angles between the injection direction of both groups of needle injection apparatuses 170 and the first direction are set between 25° and 55°, which can not only ensure the structural strength of the multilayer composite electrode sheet 100, but also improve the connection stability between the plurality of lithium manganese iron phosphate layers.

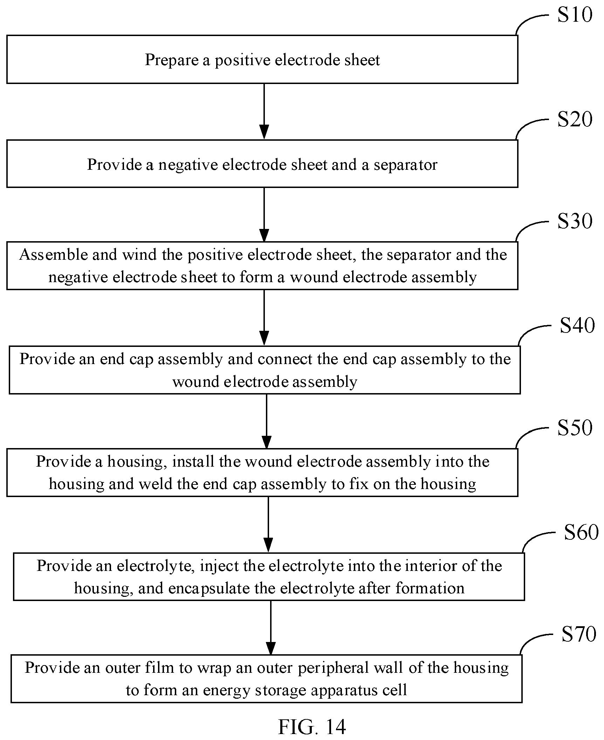

Referring to FIG. 14, an embodiment of the present application further provides a preparation method of an energy storage apparatus, where the preparation method comprises the following steps.

In step S10, a positive electrode sheet is prepared.

The positive electrode sheet is prepared by using the preparation method of the multilayer composite electrode sheet 100 in the above embodiment, and details may refer to the description in the above embodiment, which will not be repeated herein.

In step S20, a negative electrode sheet and a separator are provided.

In step S30, the positive electrode sheet, the separator and the negative electrode sheet are assembled and wound to form a wound electrode assembly.

In step S40, a end cap assembly is provided and connected to the wound electrode assembly.

In step S50, a housing is provided, the wound electrode assembly is installed into the housing, and the end cap assembly is welded and fixed to the housing.

In step S60, an electrolyte is provided, the electrolyte is injected into the interior of the housing and encapsulated after battery formation.

In step S70, an outer film is provided to wrap an outer peripheral wall of the housing to form an energy storage apparatus cell.

Since the positive electrode sheet in the energy storage apparatus preparation method is prepared by the preparation method of the multilayer composite electrode sheet 100 in the above embodiment, the energy storage apparatus prepared by the above preparation method of the energy storage apparatus has a high energy density and better overall performance.

Exemplarily, in the electrode sheet performance test, the button battery is assembled for testing. The specific process of assembling the button battery is as follows: first, the positive electrode sheet and the negative electrode sheet are put into a press machine respectively to be pressed, so that the vacuum bubbles in the positive electrode sheet and the negative electrode sheet are eliminated. Then, the pressed positive electrode sheet and negative electrode sheet are cut to form a positive electrode disc with a first preset diameter and a negative electrode disc with a second preset diameter (where the first preset diameter is smaller than the second preset diameter). The positive electrode sheet and the negative electrode sheet are cut by using a punch machine, respectively. Exemplarily, the diameter of the positive electrode disc is 15mm, i.e., the first preset diameter is 15mm, and the diameter of the negative electrode disc is 18mm, i.e., the second preset diameter is 18mm. Finally, the positive electrode disc and negative electrode disc are assembled in a glove box filled with protective gas (e.g., argon), and the positive electrode disc, negative electrode disc, polyethylene separator and other components are assembled together and then injected with electrolyte to form an energy storage apparatus. The electrolyte refers to a solution obtained by using 1 mol/L lithium hexafluorophosphate dissolved in a mixed solvent of ethylene carbonate and diethyl carbonate with a molar ratio of 1:1. By having the first preset diameter smaller than the second preset diameter, lithium deposition on the negative electrode sheet can be avoided, thereby ensuring the performance of the prepared energy storage apparatus.

An embodiment of the present application further provides an energy storage apparatus, which comprises the multilayer composite electrode sheet 100 in the above embodiment.

It can be noted that the energy storage apparatus may be a lithium battery, a button battery, a power battery and the like. The above-mentioned energy storage apparatus may also be prepared and formed by using the above-mentioned preparation method of the energy storage apparatus.

As a result, the energy storage apparatus has a high energy density and good overall performance.

Finally, it can be noted that the above embodiments are only used to illustrate the technical solutions of the present disclosure, but not to limit them. Although the present application has been described in detail with reference to the foregoing embodiments, those of ordinary skill in the art can understand that they may still modify the technical solutions recorded in the foregoing embodiments, or make equivalent substitutions for part or all of the technical features therein. However, these modifications or substitutions do not cause the essence of the corresponding technical solutions to depart from the scope of the technical solutions of the embodiments of the present disclosure.

## Claims

1. A multilayer composite electrode sheet, comprising:
a positive current collector (110);
a first lithium manganese iron phosphate layer (120), wherein the first lithium manganese iron phosphate layer (120) is disposed on the positive current collector (110);
a second lithium manganese iron phosphate layer (130), wherein the second lithium manganese iron phosphate layer (130) is disposed on a surface of the first lithium manganese iron phosphate layer (120) facing away from the positive current collector (110);
a third lithium manganese iron phosphate layer (140), wherein the third lithium manganese iron phosphate layer (140) is disposed on a surface of the second lithium manganese iron phosphate layer (130) facing away from the first lithium manganese iron phosphate layer (120);
first conductive fibers (150), wherein an end of the first conductive fiber (150) is inserted obliquely into the surface of the first lithium manganese iron phosphate layer (120) facing away from the positive current collector (110), and an other end of the first conductive fiber (150) is inserted obliquely into a surface of the second lithium manganese iron phosphate layer (130) facing toward the positive current collector (110); and
second conductive fibers (160), wherein an end of the second conductive fiber (160) is inserted obliquely into the surface of the second lithium manganese iron phosphate layer (130) facing away from the positive current collector (110), and an other end of the second conductive fiber (160) is inserted obliquely into a surface of the third lithium manganese iron phosphate layer (140) facing toward the positive current collector (110);
wherein the first conductive fibers (150) extend along a direction that forms a first acute angle (R1) with a first direction, the second conductive fibers (160) extend along a direction that forms a second acute angle (R2) with the first direction, and the first direction is a thickness direction of the positive current collector (110).

2. The multilayer composite electrode sheet according to claim 1, wherein the first acute angle (R1) and the second acute angle (R2) are both in a range between 25° and 55°.

3. The multilayer composite electrode sheet according to claim 1, wherein a cross sectional plane of stacked first lithium manganese iron phosphate layer (120) and second lithium manganese iron phosphate layer (130) in the first direction is a first section, and projections of at least two of the first conductive fibers (150) on the first section are in a crossed state; and
wherein a cross sectional plane of the stacked second lithium manganese iron phosphate layer (130) and third lithium manganese iron phosphate layer (140) in the first direction is a second section, and projections of at least two of the second conductive fibers (160) on the second section are in a crossed state.

4. The multilayer composite electrode sheet according to claim 1, wherein an insertion depth of the first conductive fibers (150) into the first lithium manganese iron phosphate layer (120) is the same as an insertion depth of the first conductive fibers (150) into the second lithium manganese iron phosphate layer (130); and/or
wherein an insertion depth of the second conductive fibers (160) into the second lithium manganese iron phosphate layer (130) is the same as an insertion depth of the second conductive fibers (160) into the third lithium manganese iron phosphate layer (140).

5. The multilayer composite electrode sheet according to claim 4, wherein the insertion depth of the first conductive fibers (150) into the first lithium manganese iron phosphate layer (120) is in a range of 2µm to 6µm, and/or the insertion depth of the second conductive fibers (160) into the second lithium manganese iron phosphate layer (130) is in a range of 2µm to 6µm.

6. The multilayer composite electrode sheet according to claim 1, wherein an element content of a manganese metal in the third lithium manganese iron phosphate layer (140) is less than an element content of the manganese metal in the second lithium manganese iron phosphate layer (130), and the element content of the manganese metal in the third lithium manganese iron phosphate layer (140) is less than an element content of the manganese metal in the first lithium manganese iron phosphate layer (120),
wherein preferably the element content of the manganese metal in the second lithium manganese iron phosphate layer (130) is less than the element content of the manganese metal in the first lithium manganese iron phosphate layer (120).

7. The multilayer composite electrode sheet according to any one of claims 1 to 6, wherein
a thickness of the first lithium manganese iron phosphate layer (120) is in a range of 30µm to 50µm; and/or
a thickness of the second lithium manganese iron phosphate layer (130) is in a range of 20µm to 30µm; and/or
a thickness of the third lithium manganese iron phosphate layer (140) is in a range of 30µm to 40µm.

8. An energy storage apparatus, comprising a multilayer composite electrode sheet according to any one of claims 1 to 7.

9. A preparation method of a multilayer composite electrode sheet, wherein the preparation method is used to prepare a multilayer composite electrode sheet according to any one of claims 1 to 7, and
the preparation method comprises:
step 1, coating a positive electrode slurry on a positive current collector (110) to form a first lithium manganese iron phosphate layer (120);
step 2, inserting first conductive fibers (150) into a surface of the first lithium manganese iron phosphate layer (120) facing away from the positive current collector (110) in a direction that forms a first acute angle (R1) with a first direction, and making a portion of the first conductive fibers (150) protrude from the surface of the first lithium manganese iron phosphate layer (120) facing away from the positive current collector (110);
step 3, coating a positive electrode slurry on a side of the first lithium manganese iron phosphate layer (120) into which the first conductive fibers (150) are inserted, to form a second lithium manganese iron phosphate layer (130), so that the first conductive fibers (150) protruding from the first lithium manganese iron phosphate layer (120) are inserted into the second lithium manganese iron phosphate layer (130) in the direction that forms the first acute angle (R1) with the first direction;
step 4, inserting second conductive fibers (160) into a surface of the second lithium manganese iron phosphate layer (130) facing away from the positive current collector (110) in a direction that forms a second acute angle (R2) with the first direction, and making a portion of the second conductive fibers (160) protrude from the surface of the second lithium manganese iron phosphate layer (130) facing away from the positive current collector (110); and
step 5, coating a positive electrode slurry on a side of the second lithium manganese iron phosphate layer (130) into which the second conductive fibers (160) are inserted, to form a third lithium manganese iron phosphate layer (140), so that the second conductive fibers (160) protruding from the second lithium manganese iron phosphate layer (130) are inserted into the third lithium manganese iron phosphate layer (140) in the direction that forms the second acute angle (R2) with the first direction.

10. The preparation method of the multilayer composite electrode sheet according to claim 9, wherein the step 2 comprises:
injecting an end of the first conductive fiber (150) into the surface of the first lithium manganese iron phosphate layer (120) facing away from the positive current collector (110) in the direction that forms the first acute angle (R1) with the first direction by a needle injection apparatus (170).

11. The preparation method of the multilayer composite electrode sheet according to claim 10, wherein the preparation method comprises:
injecting, by the needle injection apparatus (170), the first conductive fibers (150) in a state where the first lithium manganese iron phosphate layer (120) is not completely dry.

12. The preparation method of the multilayer composite electrode sheet according to claim 10, wherein the step 2 comprises:
providing two groups of the needle injection apparatuses (170);
adjusting injection directions of the two groups of the needle injection apparatuses (170) to be mirrored with respect to the first direction, so that the injection directions of the two groups of the needle injection apparatuses (170) both form the first acute angle (R1) with the first direction; and
injecting the first conductive fibers (150) that form the first acute angle (R1) with the first direction into the surface of the first lithium manganese iron phosphate layer (120) facing away from the positive current collector (110) respectively by the two groups of the needle injection apparatuses (170).

13. The preparation method of the multilayer composite electrode sheet according to claim 12, wherein the adjusting the injection directions of the two groups of the needle injection apparatuses (170) to be mirrored with respect to the first direction, so that the injection directions of the two groups of the needle injection apparatuses (170) both form the first acute angle (R1) with the first direction comprises:
adjusting the injection directions of the two groups of the needle injection apparatuses (170) to both form an angle of 25° to 55° with the first direction.

14. The preparation method of the multilayer composite electrode sheet according to claim 9, wherein the step 4 comprises:
injecting an end of the second conductive fiber (160) into the surface of the second lithium manganese iron phosphate layer (130) facing away from the positive current collector (110) in the direction that forms the second acute angle (R2) with the first direction by a needle injection apparatus (170).

15. A preparation method of an energy storage apparatus, wherein the preparation method comprises:
(S10) preparing a positive electrode sheet, wherein the positive electrode sheet is prepared by a preparation method of the positive electrode sheet according to any one of claims 9 to 14;
(S20) providing a negative electrode sheet and a separator;
(S30) assembling and winding the positive electrode sheet, the separator and the negative electrode sheet to form a wound electrode assembly;
(S40) providing an end cap assembly and connecting the end cap assembly to the wound electrode assembly;
(S50) providing a housing, installing the wound electrode assembly into the housing, and welding the end cap assembly to fix on the housing;
(S60) providing an electrolyte, injecting the electrolyte into an interior of the housing, and encapsulating the electrolyte after formation; and
(S70) providing an outer film to wrap an outer peripheral wall of the housing to form an energy storage apparatus cell.

## Patentansprüche

1. Mehrschichtige Verbundelektrodenfolie, umfassend:
einen positiven Stromkollektor (110);
eine erste Lithium-Mangan-Eisenphosphat-Schicht (120), wobei sich die erste Lithium-Mangan-Eisenphosphat-Schicht (120) auf dem positiven Stromkollektor (110) befindet;
eine zweite Lithium-Mangan-Eisenphosphat-Schicht (130), wobei sich die zweite Lithium-Mangan-Eisenphosphat-Schicht (130) auf einer Oberfläche der ersten Lithium-Mangan-Eisenphosphat-Schicht (120) befindet, die vom positiven Stromkollektor (110) abgewandt ist;
eine dritte Lithium-Mangan-Eisenphosphat-Schicht (140), wobei sich die dritte Lithium-Mangan-Eisenphosphat-Schicht (140) auf einer Oberfläche der zweiten Lithium-Mangan-Eisenphosphat-Schicht (130) befindet, die von der ersten Lithium-Mangan-Eisenphosphat-Schicht (120) abgewandt ist;
erste leitfähige Fasern (150), wobei ein Ende der ersten leitfähigen Faser (150) schräg in die Oberfläche der ersten Lithium-Mangan-Eisenphosphat-Schicht (120) eingeführt ist, die vom positiven Stromkollektor (110) abgewandt ist, und ein anderes Ende der ersten leitfähigen Faser (150) schräg in eine Oberfläche der zweiten Lithium-Mangan-Eisenphosphat-Schicht (130) eingeführt ist, die dem positiven Stromkollektor (110) zugewandt ist; und
zweite leitfähige Fasern (160), wobei ein Ende der zweiten leitfähigen Faser (160) schräg in die Oberfläche der zweiten Lithium-Mangan-Eisenphosphat-Schicht (130) eingeführt ist, die vom positiven Stromkollektor (110) abgewandt ist, und ein anderes Ende der zweiten leitfähigen Faser (160) schräg in eine Oberfläche der dritten Lithium-Mangan-Eisenphosphat-Schicht (140) eingeführt ist, die dem positiven Stromkollektor (110) zugewandt ist;
wobei sich die ersten leitfähigen Fasern (150) entlang einer Richtung erstrecken, die einen ersten spitzen Winkel (R1) mit einer ersten Richtung ausbildet, sich die zweiten leitfähigen Fasern (160) entlang einer Richtung erstrecken, die einen zweiten spitzen Winkel (R2) mit der ersten Richtung ausbildet, und die erste Richtung eine Dickenrichtung des positiven Stromkollektors (110) ist.

2. Mehrschichtige Verbundelektrodenfolie gemäß Anspruch 1, wobei der erste spitze Winkel (R1) und der zweite spitze Winkel (R2) beide in einem Bereich zwischen 25° und 55° liegen.

3. Mehrschichtige Verbundelektrodenfolie gemäß Anspruch 1, wobei eine Querschnittsebene der in der ersten Richtung gestapelten ersten Lithium-Mangan-Eisenphosphat-Schicht (120) und der zweiten Lithium-Mangan-Eisenphosphat-Schicht (130) ein erster Abschnitt ist und Projektionen von mindestens zwei der ersten leitfähigen Fasern (150) auf den ersten Abschnitt in einem gekreuzten Zustand sind; und
wobei eine Querschnittsebene der in der ersten Richtung gestapelten zweiten Lithium-Mangan-Eisenphosphat-Schicht (130) und der dritten Lithium-Mangan-Eisenphosphat-Schicht (140) ein zweiter Abschnitt ist und Projektionen von mindestens zwei der zweiten leitfähigen Fasern (160) auf den zweiten Abschnitt in einem gekreuzten Zustand sind.

4. Mehrschichtige Verbundelektrodenfolie gemäß Anspruch 1, wobei eine Einführtiefe der ersten leitfähigen Fasern (150) in die erste Lithium-Mangan-Eisenphosphat-Schicht (120) gleich der Einführtiefe der ersten leitfähigen Fasern (150) in die zweite Lithium-Mangan-Eisenphosphat-Schicht (130) ist; und/oder
wobei die Einführtiefe der zweiten leitfähigen Fasern (160) in die zweite Lithium-Mangan-Eisenphosphat-Schicht (130) gleich der Einführtiefe der zweiten leitfähigen Fasern (160) in die dritte Lithium-Mangan-Eisenphosphat-Schicht (140) ist.

5. Mehrschichtige Verbundelektrodenfolie gemäß Anspruch 4, wobei die Einführtiefe der ersten leitfähigen Fasern (150) in die erste Lithium-Mangan-Eisenphosphat-Schicht (120) in einem Bereich von 2 µm bis 6 µm liegt, und/oder die Einführtiefe der zweiten leitfähigen Fasern (160) in die zweite Lithium-Mangan-Eisenphosphat-Schicht (130) im Bereich von 2 µm bis 6 µm liegt.

6. Mehrschichtige Verbundelektrodenfolie gemäß Anspruch 1, wobei ein Elementgehalt eines Manganmetalls in der dritten Lithium-Mangan-Eisenphosphat-Schicht (140) geringer ist als ein Elementgehalt des Manganmetalls in der zweiten Lithium-Mangan-Eisenphosphat-Schicht (130), und der Elementgehalt des Manganmetalls in der dritten Lithium-Mangan-Eisenphosphat-Schicht (140) geringer ist als ein Elementgehalt des Manganmetalls in der ersten Lithium-Mangan-Eisenphosphat-Schicht (120),
wobei vorzugsweise der Elementgehalt des Manganmetalls in der zweiten Lithium-Mangan-Eisenphosphat-Schicht (130) geringer ist als der Elementgehalt des Manganmetalls in der ersten Lithium-Mangan-Eisenphosphat-Schicht (120).

7. Mehrschichtige Verbundelektrodenfolie gemäß einem der Ansprüche 1 bis 6, wobei
eine Dicke der ersten Lithium-Mangan-Eisenphosphat-Schicht (120) in einem Bereich von 30 µm bis 50 µm liegt; und/oder
eine Dicke der zweiten Lithium-Mangan-Eisenphosphat-Schicht (130) im Bereich von 20 µm bis 30 µm liegt; und/oder
eine Dicke der dritten Lithium-Mangan-Eisenphosphat-Schicht (140) im Bereich von 30 µm bis 40 µm liegt.

8. Energiespeichergerät, umfassend eine mehrschichtige Verbundelektrodenfolie gemäß einem der Ansprüche 1 bis 7.

9. Herstellungsverfahren einer mehrschichtigen Verbundelektrodenfolie, wobei das Herstellungsverfahren zur Herstellung einer mehrschichtigen Verbundelektrodenfolie gemäß einem der Ansprüche 1 bis 7 verwendet wird und
das Herstellungsverfahren Folgendes umfasst :
Schritt 1: Aufbringen einer positiven Elektrodenaufschlämmung auf einen positiven Stromkollektor (110), um eine erste Lithium-Mangan-Eisenphosphat-Schicht (120) auszubilden;
Schritt 2: Einführen erster leitfähiger Fasern (150) in eine Oberfläche der ersten Lithium-Mangan-Eisenphosphat-Schicht (120), die vom positiven Stromkollektor (110) in einer Richtung, die mit einer ersten Richtung einen ersten spitzen Winkel (R1) ausbildet, abgewandt ist und Bewirken, dass ein Bereich der ersten leitfähigen Fasern (150) aus der Oberfläche der ersten Lithium-Mangan-Eisenphosphat-Schicht (120) herausragt, die vom positiven Stromkollektor (110) abgewandt ist;
Schritt 3: Aufbringen einer positiven Elektrodenaufschlämmung auf eine Seite der ersten Lithium-Mangan-Eisenphosphat-Schicht (120), in die die ersten leitfähigen Fasern (150) eingeführt sind, um eine zweite Lithium-Mangan-Eisenphosphat-Schicht (130) auszubilden, sodass die aus der ersten Lithium-Mangan-Eisenphosphat-Schicht (120) herausragenden ersten leitfähigen Fasern (150) in die zweite Lithium-Mangan-Eisenphosphat-Schicht (130) in der Richtung eingeführt werden, die mit der ersten Richtung den ersten spitzen Winkel (R1) ausbildet;
Schritt 4: Einführen zweiter leitfähiger Fasern (160) in eine Oberfläche der zweiten Lithium-Mangan-Eisenphosphat-Schicht (130), die vom positiven Stromkollektor (110) in einer Richtung, die einen zweiten spitzen Winkel (R2) mit der ersten Richtung ausbildet, abgewandt ist und Bewirken, dass ein Bereich der zweiten leitfähigen Fasern (160) aus der Oberfläche der zweiten Lithium-Mangan-Eisenphosphat-Schicht (130) herausragt, die vom positiven Stromkollektor (110) abgewandt ist; und
Schritt 5: Aufbringen einer positiven Elektrodenaufschlämmung auf eine Seite der zweiten Lithium-Mangan-Eisenphosphat-Schicht (130), in die die zweiten leitfähigen Fasern (160) eingeführt sind, um eine dritte Lithium-Mangan-Eisenphosphat-Schicht (140) auszubilden, sodass die aus der zweiten Lithium-Mangan-Eisenphosphat-Schicht (130) herausragenden zweiten leitfähigen Fasern (160) in die dritte Lithium-Mangan-Eisenphosphat-Schicht (140) in der Richtung eingeführt werden, die den zweiten spitzen Winkel (R2) mit der ersten Richtung ausbildet.

10. Herstellungsverfahren der mehrschichtigen Verbundelektrodenfolie gemäß Anspruch 9, wobei der Schritt 2 Folgendes umfasst:
Einspritzen eines Endes der ersten leitfähigen Faser (150) in die vom positiven Stromkollektor (110) abgewandte Oberfläche der ersten Lithium-Mangan-Eisenphosphat-Schicht (120) in einer Richtung, die mit der ersten Richtung den ersten spitzen Winkel (R1) ausbildet, mittels eines Nadelinjektionsgeräts (170).

11. Herstellungsverfahren der mehrschichtigen Verbundelektrodenfolie gemäß Anspruch 10, wobei das Herstellungsverfahren Folgendes umfasst:
Einbringen der ersten leitfähigen Fasern (150) mittels des Nadelinjektionsgeräts (170) in einem Zustand, in dem die erste Lithium-Mangan-Eisenphosphat-Schicht (120) nicht vollständig trocken ist.

12. Herstellungsverfahren der mehrschichtigen Verbundelektrodenfolie gemäß Anspruch 10, wobei der Schritt 2 Folgendes umfasst:
Bereitstellen von zwei Gruppen der Nadelinjektionsgeräte (170);
Einstellung von Einspritzrichtungen der beiden Gruppen der Nadelinjektionsgeräte (170) so, dass sie in Bezug auf die erste Richtung spiegelbildlich zueinander sind, sodass die Einspritzrichtungen der beiden Gruppen der Nadelinjektionsgeräte (170) beide den ersten spitzen Winkel (R1) mit der ersten Richtung ausbilden; und
Einspritzen der ersten leitfähigen Fasern (150), die mit der ersten Richtung den ersten spitzen Winkel (R1) ausbilden, in die vom positiven Stromkollektor (110) abgewandte Oberfläche der ersten Lithium-Mangan-Eisenphosphat-Schicht (120) jeweils durch die beiden Gruppen der Nadelinjektionsgeräte (170).

13. Herstellungsverfahren der mehrschichtigen Verbundelektrodenfolie gemäß Anspruch 12, wobei das Einstellen der Injektionsrichtungen der zwei Gruppen der Nadelinjektionsgeräte (170) so, dass sie in Bezug auf die erste Richtung spiegelbildlich zueinander liegen, sodass die Injektionsrichtungen der beiden Gruppen der Nadelinjektionsgeräte (170) beide einen ersten spitzen Winkel (R1) mit der ersten Richtung ausbilden, Folgendes umfasst:
Einstellen der Einspritzrichtungen der beiden Gruppen der Nadelinjektionsgeräte (170) derart, dass sie beide einen Winkel von 25° bis 55° mit der ersten Richtung ausbilden.

14. Herstellungsverfahren der mehrschichtigen Verbundelektrodenfolie gemäß Anspruch 9, wobei der Schritt 4 Folgendes umfasst:
Einspritzen eines Endes der zweiten leitfähigen Faser (160) in die vom positiven Stromkollektor (110) abgewandte Oberfläche der zweiten Lithium-Mangan-Eisenphosphat-Schicht (130) in einer Richtung, die mit der ersten Richtung einen zweiten spitzen Winkel (R2) ausbildet, mittels eines Nadelinjektionsgeräts (170).

15. Herstellungsverfahren eines Energiespeichergeräts, wobei das Herstellungsverfahren Folgendes umfasst:
(S10) Herstellen einer positiven Elektrodenfolie, wobei die positive Elektrodenfolie durch ein Herstellungsverfahren für die positive Elektrodenfolie gemäß einem der Ansprüche 9 bis 14 hergestellt wird;
(S20) Bereitstellen einer negativen Elektrodenfolie und eines Separators;
(S30) Zusammenfügen und Aufwickeln der positiven Elektrodenfolie, des Separators und der negativen Elektrodenfolie, um eine gewickelte Elektrodenanordnung zu bilden;
(S40) Bereitstellen einer Endkappenanordnung und Verbinden der Endkappenanordnung mit der gewickelten Elektrodenanordnung;
(S50) Bereitstellen eines Gehäuses, Einbauen der gewickelten Elektrodenanordnung in das Gehäuse und Verschweißen der Endkappenanordnung zur Befestigung am Gehäuse;
(S60) Bereitstellen eines Elektrolyten, Einspritzen des Elektrolyten in das Innere des Gehäuses und Einkapseln des Elektrolyten nach der Ausbildung; und
(S70) Bereitstellen einer Außenfolie zum Umwickeln einer Außenumfangswand des Gehäuses, um eine Zelle eines Energiespeichergeräts auszubilden.

## Revendications

1. Feuille d'électrode composite multicouche, comprenant :
un collecteur de courant positif (110) ;
une première couche de phosphate de lithium-manganèse-fer (120), la première couche de phosphate de lithium-manganèse-fer (120) étant disposée sur le collecteur de courant positif (110) ;
une deuxième couche de phosphate de lithium-manganèse-fer (130), la deuxième couche de phosphate de lithium-manganèse-fer (130) étant disposée sur une surface de la première couche de phosphate de lithium-manganèse-fer (120) opposée au collecteur de courant positif (110) ;
une troisième couche de phosphate de lithium-manganèse-fer (140), la troisième couche de phosphate de lithium-manganèse-fer (140) étant disposée sur une surface de la deuxième couche de phosphate de lithium-manganèse-fer (130) opposée à la première couche de phosphate de lithium-manganèse-fer (120) ; des premières fibres conductrices (150), une extrémité de la première fibre conductrice (150) étant insérée obliquement dans la surface de la première couche de phosphate de lithium-manganèse-fer (120) opposée au collecteur de courant positif (110), et une autre extrémité de la première fibre conductrice (150) étant insérée obliquement dans une surface de la deuxième couche de phosphate de lithium-manganèse-fer (130) tournée vers le collecteur de courant positif (110) ; et
des deuxièmes fibres conductrices (160), une extrémité de la deuxième fibre conductrice (160) étant insérée obliquement dans la surface de la deuxième couche de phosphate de lithium-manganèse-fer (130) opposée au collecteur de courant positif (110), et une autre extrémité de la deuxième fibre conductrice (160) étant insérée obliquement dans une surface de la troisième couche de phosphate de lithium-manganèse-fer (140) tournée vers le collecteur de courant positif (110) ;
dans laquelle les premières fibres conductrices (150) s'étendent selon une direction formant un premier angle aigu (R1) avec une première direction, les deuxièmes fibres conductrices (160) s'étendent selon une direction formant un deuxième angle aigu (R2) avec la première direction, et la première direction est une direction d'épaisseur du collecteur de courant positif (110).

2. Feuille d'électrode composite multicouche selon la revendication 1, dans laquelle le premier angle aigu (R1) et le deuxième angle aigu (R2) sont tous deux compris dans une plage allant de 25° à 55°.

3. Feuille d'électrode composite multicouche selon la revendication 1, dans laquelle un plan en coupe transversale de l'empilement de la première couche de phosphate de lithium-manganèse-fer (120) et de la deuxième couche de phosphate de lithium-manganèse-fer (130) dans la première direction est une première section, et des projections d'au moins deux des premières fibres conductrices (150) sur la première section sont dans un état croisé ; et
dans laquelle un plan en coupe transversale de l'empilement de la deuxième couche de phosphate de lithium-manganèse-fer (130) et de la troisième couche de phosphate de lithium-manganèse-fer (140) dans la première direction est une deuxième section, et des projections d'au moins deux des deuxièmes fibres conductrices (160) sur la deuxième section sont dans un état croisé.

4. Feuille d'électrode composite multicouche selon la revendication 1, dans laquelle une profondeur d'insertion des premières fibres conductrices (150) dans la première couche de phosphate de lithium-manganèse-fer (120) est identique à une profondeur d'insertion des premières fibres conductrices (150) dans la deuxième couche de phosphate de lithium-manganèse-fer (130) ; et/ou
dans laquelle une profondeur d'insertion des deuxièmes fibres conductrices (160) dans la deuxième couche de phosphate de lithium-manganèse-fer (130) est identique à une profondeur d'insertion des deuxièmes fibres conductrices (160) dans la troisième couche de phosphate de lithium-manganèse-fer (140).

5. Feuille d'électrode composite multicouche selon la revendication 4, dans laquelle la profondeur d'insertion des premières fibres conductrices (150) dans la première couche de phosphate de lithium-manganèse-fer (120) est comprise dans une plage de 2 µm à 6 µm, et/ou la profondeur d'insertion des deuxièmes fibres conductrices (160) dans la deuxième couche de phosphate de lithium-manganèse-fer (130) est comprise dans une plage de 2 µm à 6 µm.

6. Feuille d'électrode composite multicouche selon la revendication 1, dans laquelle une teneur élémentaire en métal manganèse dans la troisième couche de phosphate de lithium-manganèse-fer (140) est inférieure à une teneur élémentaire en métal manganèse dans la deuxième couche de phosphate de lithium-manganèse-fer (130), et la teneur élémentaire en métal manganèse dans la troisième couche de phosphate de lithium-manganèse-fer (140) est inférieure à une teneur élémentaire en métal manganèse dans la première couche de phosphate de lithium-manganèse-fer (120),
dans laquelle, de préférence, la teneur élémentaire en métal manganèse dans la deuxième couche de phosphate de lithium-manganèse-fer (130) est inférieure à la teneur élémentaire en métal manganèse dans la première couche de phosphate de lithium-manganèse-fer (120).

7. Feuille d'électrode composite multicouche selon l'une quelconque des revendications 1 à 6, dans laquelle une épaisseur de la première couche de phosphate de lithium-manganèse-fer (120) est comprise dans une plage de 30 µm à 50 µm ; et/ou
une épaisseur de la deuxième couche de phosphate de lithium-manganèse-fer (130) est comprise dans une plage de 20 µm à 30 µm ; et/ou
une épaisseur de la troisième couche de phosphate de lithium-manganèse-fer (140) est comprise dans une plage de 30 µm à 40 µm.

8. Appareil de stockage d'énergie, comprenant une feuille d'électrode composite multicouche selon l'une quelconque des revendications 1 à 7.

9. Procédé de préparation d'une feuille d'électrode composite multicouche, dans lequel le procédé de préparation est utilisé pour préparer une feuille d'électrode composite multicouche selon l'une quelconque des revendications 1 à 7, et
le procédé de préparation comprend :
l'étape 1, consistant à enduire une boue d'électrode positive sur un collecteur de courant positif (110) pour former une première couche de phosphate de lithium-manganèse-fer (120) ;
l'étape 2, consistant à insérer des premières fibres conductrices (150) dans une surface de la première couche de phosphate de lithium-manganèse-fer (120) opposée au collecteur de courant positif (110) selon une direction formant un premier angle aigu (R1) avec une première direction, et à faire en sorte qu'une partie des premières fibres conductrices (150) fasse saillie hors de la surface de la première couche de phosphate de lithium-manganèse-fer (120) opposée au collecteur de courant positif (110) ;
l'étape 3, consistant à enduire une boue d'électrode positive sur un côté de la première couche de phosphate de lithium-manganèse-fer (120) dans lequel les premières fibres conductrices (150) sont insérées, pour former une deuxième couche de phosphate de lithium-manganèse-fer (130), de sorte que les premières fibres conductrices (150) faisant saillie hors de la première couche de phosphate de lithium-manganèse-fer (120) soient insérées dans la deuxième couche de phosphate de lithium-manganèse-fer (130) selon la direction formant le premier angle aigu (R1) avec la première direction ;
l'étape 4, consistant à insérer des deuxièmes fibres conductrices (160) dans une surface de la deuxième couche de phosphate de lithium-manganèse-fer (130) opposée au collecteur de courant positif (110) selon une direction formant un deuxième angle aigu (R2) avec la première direction, et à faire en sorte qu'une partie des deuxièmes fibres conductrices (160) fasse saillie hors de la surface de la deuxième couche de phosphate de lithium-manganèse-fer (130) opposée au collecteur de courant positif (110) ; et
l'étape 5, consistant à enduire une boue d'électrode positive sur un côté de la deuxième couche de phosphate de lithium-manganèse-fer (130) dans lequel les deuxièmes fibres conductrices (160) sont insérées, pour former une troisième couche de phosphate de lithium-manganèse-fer (140), de sorte que les deuxièmes fibres conductrices (160) faisant saillie hors de la deuxième couche de phosphate de lithium-manganèse-fer (130) soient insérées dans la troisième couche de phosphate de lithium-manganèse-fer (140) selon la direction formant le deuxième angle aigu (R2) avec la première direction.

10. Procédé de préparation de la feuille d'électrode composite multicouche selon la revendication 9, dans lequel l'étape 2 comprend :
l'injection d'une extrémité de la première fibre conductrice (150) dans la surface de la première couche de phosphate de lithium-manganèse-fer (120) opposée au collecteur de courant positif (110), selon la direction formant le premier angle aigu (R1) avec la première direction, au moyen d'un dispositif d'injection à aiguilles (170).

11. Procédé de préparation de la feuille d'électrode composite multicouche selon la revendication 10, dans lequel le procédé de préparation comprend :
l'injection, au moyen du dispositif d'injection à aiguilles (170), des premières fibres conductrices (150) dans un état où la première couche de phosphate de lithium-manganèse-fer (120) n'est pas complètement sèche.

12. Procédé de préparation de la feuille d'électrode composite multicouche selon la revendication 10, dans lequel l'étape 2 comprend :
la mise à disposition de deux groupes de dispositifs d'injection à aiguilles (170) ;
l'ajustement des directions d'injection des deux groupes de dispositifs d'injection à aiguilles (170) de manière à être en miroir par rapport à la première direction, de sorte que les directions d'injection des deux groupes de dispositifs d'injection à aiguilles (170) forment toutes deux le premier angle aigu (R1) avec la première direction ; et
l'injection, respectivement par les deux groupes de dispositifs d'injection à aiguilles (170), des premières fibres conductrices (150) qui forment le premier angle aigu (R1) avec la première direction dans la surface de la première couche de phosphate de lithium-manganèse-fer (120) opposée au collecteur de courant positif (110).

13. Procédé de préparation de la feuille d'électrode composite multicouche selon la revendication 12, dans lequel l'ajustement des directions d'injection des deux groupes de dispositifs d'injection à aiguilles (170) de manière à être en miroir par rapport à la première direction, de sorte que les directions d'injection des deux groupes de dispositifs d'injection à aiguilles (170) forment toutes deux le premier angle aigu (R1) avec la première direction, comprend :
l'ajustement des directions d'injection des deux groupes de dispositifs d'injection à aiguilles (170) de manière à former toutes deux un angle de 25° à 55° avec la première direction.

14. Procédé de préparation de la feuille d'électrode composite multicouche selon la revendication 9, dans lequel l'étape 4 comprend :
l'injection d'une extrémité de la deuxième fibre conductrice (160) dans la surface de la deuxième couche de phosphate de lithium-manganèse-fer (130) opposée au collecteur de courant positif (110), selon la direction formant le deuxième angle aigu (R2) avec la première direction, au moyen d'un dispositif d'injection à aiguilles (170).

15. Procédé de préparation d'un appareil de stockage d'énergie, dans lequel le procédé de préparation comprend :
(S10) la préparation d'une électrode positive, l'électrode positive étant préparée par un procédé de préparation de l'électrode positive selon l'une quelconque des revendications 9 à 14 ;
(S20) la mise à disposition d'une électrode négative et d'un séparateur ;
(S30) l'assemblage et l'enroulement de l'électrode positive, du séparateur et de l'électrode négative pour former un ensemble d'électrodes enroulé ;
(S40) la mise à disposition d'un ensemble de capot d'extrémité et la connexion de l'ensemble de capot d'extrémité à l'ensemble d'électrodes enroulé ;
(S50) la mise à disposition d'un boîtier, l'installation de l'ensemble d'électrodes enroulé dans le boîtier, et le soudage de l'ensemble de capot d'extrémité afin de le fixer sur le boîtier ;
(S60) la mise à disposition d'un électrolyte, l'injection de l'électrolyte à l'intérieur du boîtier, et l'encapsulation de l'électrolyte après formation ; et
(S70) la mise à disposition d'un film externe destiné à envelopper une paroi périphérique externe du boîtier afin de former une cellule d'appareil de stockage d'énergie.
